# EUROPEAN PATENT APPLICATION

(11) **EP 4 801 156 A1**
(43) Date of publication of application: **02.09.2026**
(21) Application number: 24898104.5
(22) Date of filing: 27.11.2024
(51) Int. Cl.: H04W 72/0453, H04L 5/00, H04W 76/15, H04B 1/00, H04W 76/14, H04W 4/80, H04W 84/12, H04W 84/18, H04W 88/02

(54) **ELECTRONIC DEVICE FOR WIRELESS LAN COMMUNICATION, AND METHOD FOR OPERATING SAME**

(30) Priority: 27.11.2023 KR 20230166881; 14.12.2023 KR 20230182184
(71) Applicant: Samsung Electronics Co., Ltd., Suwon-si, Gyeonggi-do 16677 (KR)
(72) Inventor: JUNG, Buseop, Suwon-si, Gyeonggi-do 16677 (KR); KIM, Junsung, Suwon-si, Gyeonggi-do 16677 (KR)
(74) Representative: HGF
(86) International application number: PCT/KR2024/018933
(87) International publication number: WO 2025/116510

(57) **Abstract**

One embodiment of the present invention relates to a device and method for wireless LAN communication in an electronic device. The electronic device comprises: a communication circuit; a processor; and a memory, wherein the memory may store instructions that, when executed by the processor, instruct the electronic device to: perform wireless LAN communication of a first wireless LAN protocol with a first external electronic device via a first channel of a first frequency band through the communication circuit; and perform wireless LAN communication of a second wireless LAN protocol with a second external electronic device via the first channel of the first frequency band and a second channel of a second frequency band while performing the wireless LAN communication of the first wireless LAN protocol with the first external electronic device. Other embodiments may also be possible.

## Description

### [Technical Field]

Embodiments of the disclosure relate to an electronic device for wireless LAN communication and an operation method thereof.

### [Background Art]

A wireless local area network (WLAN) system may support wireless connection of various electronic devices, such as smartphones, tablet personal computers (PCs), or notebooks, by using a predetermined frequency band (e.g., a 2.4GHz band, a 5GHz band, and/or a 6GHz band).

A wireless LAN system may be installed not only in a private space such as a house but also in a public space such as an airport, a train station, an office, or a department store. The WLAN system may be defined by an institute of electrical and electronics engineers (IEEE) 802.11 standard. For example, the IEEE 802.11 standard has been continuously developed, such as IEEE 802.11b, IEEE 802.11a, IEEE 802.11g, IEEE 802.11n, IEEE 802.11ac, IEEE 802.11ax, and IEEE 802.11be.

The above information may be provided as the related art to help for understanding of the disclosure. None of the above-described contents is claimed or determined to be applicable as the prior art related to the disclosure.

### [Disclosure of Invention]

### [Solution to Problem]

When a chipset (e.g., a Wi-Fi chipset) for WLAN communication includes a multi-core (or multi-baseband core), the electronic device may support concurrent communication of simultaneously performing WLAN communication of different frequency bands. For example, the electronic device may perform WLAN communication of a second frequency band based on a second WLAN protocol (e.g., neighbor awareness networking (NAN)) through a second core while performing WLAN communication of a first frequency band based on a first WLAN protocol (e.g., Wi-Fi direct or mobile hotspot) through a first core. For example, the multi-core may include a plurality of cores that process signals of WLAN communication transmitted and/or received through different frequency bands. For example, NAN (or Wi-Fi aware) may include a low-power short-range communication technology based on a WLAN.

However, the electronic device may have restrictions on concurrent communication of the WLAN due to constraints of an operation system (OS) or a chipset for WLAN communication. For example, when the first WLAN protocol and the second WLAN protocol use different channels in the same frequency band, the electronic device may perform WLAN communication based on different WLAN protocols through different channels in one core. When the electronic device performs WLAN communications based on different WLAN protocols through different channels in one core, the WLAN communication of the first WLAN protocol and the second WLAN protocol may be performed through different time intervals. The electronic device is restricted from performing WLAN communication based on the second WLAN protocol during a time interval in which WLAN communication based on the first WLAN protocol is performed. When the electronic device provides a low latency service (e.g., mirroring) such as real-time screen transmission through direct communication with an external electronic device based on the first WLAN protocol, message exchange, synchronization, and connection speed of the NAN communication based on the second WLAN protocol may be reduced.

An embodiment of the disclosure provides an apparatus and a method for providing concurrent communication for heterogeneous WLAN protocols by an electronic device.

The technical subjects pursued in the disclosure are not limited to the above mentioned technical subjects, and other technical subjects which are not mentioned may be clearly understood through the following descriptions by those skilled in the art of the disclosure.

According to an embodiment, an electronic device may include a communication circuit configured to perform WLAN communication, at least one processor including a processing circuit, and a memory operatively connected to the at least one processor. According to an embodiment, the memory may be configured to store instructions that, when executed by the at least one processor individually or collectively, cause the electronic device to perform WLAN communication of a first WLAN protocol with a first external electronic device by using a first channel in a first frequency band through the communication circuit. According to an embodiment, the memory may be configured to store instructions that, when executed by at least one processor individually or collectively, cause the electronic device to, based on performing the WLAN communication of the first WLAN protocol with the first external electronic device by using the first channel, perform WLAN communication of a second WLAN protocol with a second external electronic device by using the first channel in the first frequency band and a second channel in a second frequency band different from the first frequency band while performing the WLAN communication of the first WLAN protocol with the first external electronic device by using the first channel.

According to an embodiment, the method of operating the electronic device may include performing the WLAN communication of the first WLAN protocol with the first external electronic device by using the first channel in the first frequency band. According to an embodiment, the method of operating the electronic device may include, based on performing the WLAN communication of the first WLAN protocol with the first external electronic device by using the first channel, performing WLAN communication of a second WLAN protocol with a second external electronic device by using the first channel in the first frequency band and a second channel in a second frequency band different from the first frequency band while performing the WLAN communication of the first WLAN protocol with the first external electronic device by using the first channel.

According to an embodiment, a non-transitory computer-readable storage medium (or computer program product) for storing one or more programs may be described. According to an embodiment, the one or more programs may include instructions that, when executed by a processor of the electronic device, cause the electronic device to perform WLAN communication of a first WLAN protocol with a first external electronic device by using a first channel in a first frequency band and, based on performing the WLAN communication of the first WLAN protocol with the first external electronic device by using the first channel, performing WLAN communication of a second WLAN protocol with a second external electronic device by using the first channel in the first frequency band and a second channel in a second frequency band different from the first frequency band while performing the WLAN communication of the first frequency band with the first external electronic device by using the first channel.

According to an embodiment of the disclosure, when WLAN communication based on the first WLAN protocol and the second WLAN protocol is performed, the electronic device may simultaneously perform WLAN communication for heterogeneous WLAN protocols by configuring (or changing) a channel for the WLAN communication based on the second WLAN protocol, based on a channel of the first WLAN protocol.

According to an embodiment, when WLAN communication based on the first WLAN protocol and NAN communication based on the second WLAN protocol are performed, the electronic device may perform NAN communication based on a predetermined channel selected based on a channel of the first WLAN protocol among predetermined channels (e.g., channel 6 and/or channel 149) related to NAN communication and the channel of the first WLAN protocol, and thus perform the NAN communication with the first WLAN protocol at the same time while maintaining NAN communication with other external electronic devices using the predetermined channels.

In addition, various effects directly or indirectly detected through the document can be provided.

The effects that may be obtained from the embodiments of the disclosure are not limited to the effects mentioned above, and other effects that are not mentioned may be clearly understood from the following description by those skilled in the art to which the embodiments of the disclosure belong.

### [Brief Description of Drawings]

With regard to the description of the drawings, the same or like reference numerals may be used for the same or like elements.
FIG. 1 is a block diagram of an electronic device within a network environment according to an embodiment.
FIG. 2 is a diagram illustrating an NAN cluster according to an embodiment.
FIG. 3 is a diagram illustrating a protocol for transmitting a signal of the electronic device included in the NAN cluster according to an embodiment.
FIG. 4 is a diagram illustrating an example of transmitting and/or receiving data within the NAN cluster according to an embodiment.
FIG. 5 is a block diagram of the electronic device for WLAN communication according to an embodiment.
FIG. 6 is a block diagram of a communication circuit for WLAN communication according to an embodiment.
FIG. 7A is a flowchart illustrating an operation for performing WLAN communication based on heterogeneous WLAN protocols by the electronic device according to an embodiment.
FIG. 7B is a flowchart illustrating an operation for performing WLAN communication based on heterogeneous WLAN protocols by the electronic device according to an embodiment.
FIG. 8 is a flowchart illustrating an operation for performing NAN communication based on a first WLAN protocol by the electronic device according to an embodiment.
FIG. 9 is an example for performing WLAN communication based on heterogeneous WLAN protocols by the electronic device according to an embodiment.
FIG. 10 illustrates an example for performing WLAN communication based on heterogeneous WLAN protocols by the electronic device according to an embodiment.
FIG. 11 illustrates an example for performing WLAN communication based on heterogeneous WLAN protocols by the electronic device according to an embodiment.
FIG. 12 is an example for performing WLAN communication based on heterogeneous WLAN protocols by the electronic device according to an embodiment.
FIG. 13 is a flowchart illustrating an operation for performing WLAN communication based on heterogeneous WLAN protocols by the electronic device according to an embodiment.
FIG. 14 is a flowchart illustrating an operation for performing NAN communication based on a first WLAN protocol by the electronic device according to an embodiment.
FIG. 15 is an example for performing WLAN communication based on heterogeneous WLAN protocols by the electronic device according to an embodiment.

### [Mode for the Invention]

The following embodiments are described in detail with reference to the accompanying drawings.

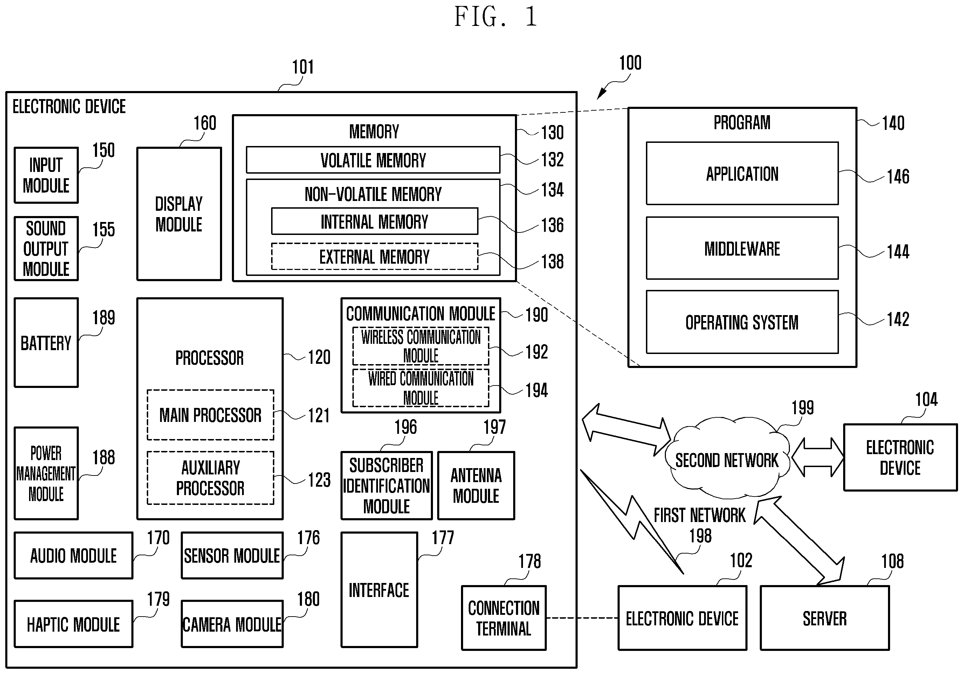

Fig. 1 is a block diagram illustrating an example electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{TM}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC. According to an embodiment, the subscriber identification module 196 may include a plurality of subscriber identification modules. For example, the plurality of subscriber identification modules may store different subscriber information.

The antenna module 197 may transmit or receive a signal or power to or from the outside (e.g., the external electronic device) of the electronic device 101. According to an embodiment, the antenna module 197 may include an antenna including a radiating element including a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band. For example, the plurality of antennas may include patch array antennas and/or dipole array antennas.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, a home appliance, or the like. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), the element may be coupled with the other element directly (e.g., wiredly), wirelessly, or via a third element.

As used in connection with various embodiments of the disclosure, the term "module" may include a unit implemented in hardware, software, or firmware, or any combination thereof, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the "non-transitory" storage medium is a tangible device, and may not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

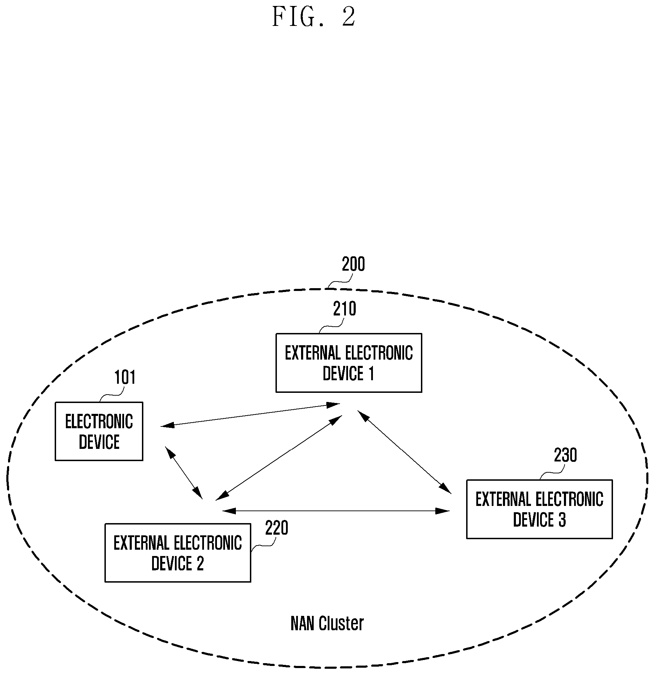

FIG. 2 is a diagram illustrating a neighbor awareness network (NAN) cluster according to various embodiments.

According to various embodiments, FIG. 2 is a diagram illustrating an example of the configuration of a NAN cluster 200 for a proximity network. According to one embodiment, the NAN cluster 200 may mean a set of electronic devices 101, 210, 220, and/or 230 that establish a proximity network so that the respective electronic device (or NAN devices) 101, 210, 220, and/or 230 can transmit and/or receive data to each other.

According to various embodiments, the NAN cluster 200 may include a plurality of electronic devices 101, 210, 220, and/or 230. The electronic devices 101, 210, 220 and/or 230 included in the NAN cluster 200 may transmit and/or receive a beacon (or synchronization beacon, discovery beacon), a service discovery frame (SDF), and/or a NAN action frame (NAF) within a synchronized time duration (or communication period) (e.g., a discovery window (DW)).

According to various embodiments, the electronic devices 101, 210, 220, and/or 230 within the NAN cluster 200 may have their time clocks synchronized with each other. For example, the electronic devices 101, 210, 220, and/or 230 may be synchronized to the time clock of one electronic device (e.g., the electronic device 101), and transmit and/or receive a beacon, an SDF, and/or an NAF in the synchronized (or same) discovery window.

According to one embodiment, the electronic device 101 supporting a low-power short-range communication technology based on NAN may broadcast a search signal (e.g., a beacon) to discover at least one of external electronic devices 210, 220, and/or 230 every predetermined first period (e.g., about 100 msec), and perform scanning every predetermined second period (e.g., about 10 msec) to receive the search signal broadcast from at least one of the external electronic devices 210, 220, and/or 230.

According to one embodiment, the electronic device 101 may detect at least one of external electronic device 210, 220 and/or 230 located around the electronic device 101 based on the search signal received through scanning, and perform NAN cluster synchronization with the detected at least one of external electronic device 210, 220 and/or 230. The NAN cluster synchronization may include an operation of receiving time clock information of an electronic device (e.g., the electronic device 101) representing a NAN cluster so that the electronic devices 101, 210, 220 and/or 230 included in the NAN cluster transmit and/or receive data on the same channel and/or during the same time.

According to one embodiment, each of the plurality of electronic devices 101, 210, 220 and/or 230 may form a single NAN cluster 200 that operates according to the synchronized time clock by transmitting a beacon and receiving a beacon from other electronic devices 101, 210, 220 and/or 230. The electronic devices 101, 210, 220 and/or 230 included in the NAN cluster 200 may perform NAN cluster synchronization (e.g., time and/or channel synchronization).

According to various embodiments, NAN cluster synchronization may be performed based on the time and channel of the electronic device (e.g., the electronic device 101) with the highest master preference within the NAN cluster 200. For example, the electronic devices 101, 210, 220, and/or 230 included in the NAN cluster 200 formed through discovery may exchange signals related to master preference information indicating a preference for operating as an anchor master device. The electronic devices 101, 210, 220, and/or 230 included in the NAN cluster 200 may determine the electronic device (e.g., the electronic device 101) with the highest master preference as an anchor master device (or a master electronic device) through the signals related to the master preference information.

According to various embodiments, the anchor master device (e.g., the electronic device 101) may mean an electronic device that serves as a reference for time and channel synchronization of the electronic devices 101, 210, 220, and/or 230 included in the NAN cluster 200. The anchor master device may be changed according to the master preference of the electronic devices 101, 210, 220, and/or 230. Each of the time and channel synchronized electronic devices 101, 210, 220, and/or 230 may transmit a beacon and/or an SDF within a discovery window (or a search period) that is repeated according to a predetermined cycle, and receive the beacon and the SDF from the other electronic devices 101, 210, 220, and/or 230 within the NAN cluster 200. In one embodiment, the beacon may be transmitted and/or received periodically every discovery window to continuously maintain time and channel synchronization of the electronic devices 101, 210, 220, and/or 230 within the NAN cluster 200. The SDF may be transmitted and/or received within the discovery window as needed to provide services to the discovered electronic devices 101, 210, 220, and/or 230. According to one embodiment, among the time and channel synchronized electronic devices 101, 210, 220, and/or 230, the electronic device (e.g., the electronic device 101) operating as the anchor master device may transmit a beacon (e.g., discovery beacon) during the interval between the discovery windows to detect new electronic devices.

According to one embodiment, each of the NAN cluster-synchronized (e.g., time and/or channel-synchronized) electronic devices 101, 210, 220, and/or 230 may transmit a NAN action frame (NAF) and receive NAFs from other electronic devices 101, 210, 220, and/or 230 within the NAN cluster 200 during a discovery window (or search interval) that repeats according to a predetermined cycle. For example, the NAF may include at least one of information related to configuring of a NAN data path (NDP), information related to scheduling update, or information related to NAN ranging to perform data communication in the interval between the discovery windows. For example, the NAF may control scheduling of wireless resources for coexistence of NAN operation and non-NAN operation (e.g., Wi-Fi Direct, mesh, IBSS, WLAN, Bluetooth, or NFC). The NAF may include time and/or channel information available for NAN communication.

According to various embodiments, each of the electronic devices 101, 210, 220, and/or 230 included in the NAN cluster 200 may operate in an active state only during the discovery window, and operate in a low-power state (e.g., a sleep state) during the remaining interval other than the discovery window, thereby reducing current consumption.

According to one embodiment, the discovery window is a period (e.g., in milliseconds) during which the electronic device 101, 210, 220, or 230 enters an active (or wake-up) state, consuming a significant amount of power. However, in the interval other than the discovery window, the electronic device 101, 210, 220, or 230 remains in a sleep state, enabling low-power discovery.

According to various embodiments, the electronic devices 101, 210, 220 and/or 230 included in the NAN cluster 200 may be simultaneously activated at the start time of the synchronized discovery window (e.g., DW start) and simultaneously transition to a sleep state at the end time of the discovery window (e.g., DW end).

According to various embodiments, each of the electronic devices 101, 210, 220, and/or 230 included in the NAN cluster 200 may transmit and/or receive data not only in the discovery window but also in the interval between the discovery windows. According to one embodiment, the electronic devices 101, 210, 220, and/or 230 included in the NAN cluster 200 may perform additional communication by configuring an active time slot in the interval between the discovery windows. For example, electronic devices 101, 210, 220 and/or 230 included in the NAN cluster 200 may transmit and/or receive SDFs that were not transmitted and/or received within the discovery window, through the active time slot. For example, the electronic devices 101, 210, 220 and/or 230 included in the NAN cluster 200 may perform NAN communication and/or non-NAN communication during the active time slot by configuring (or designating) a NAN communication operation period and/or a non-NAN communication operation period during the active time slot.

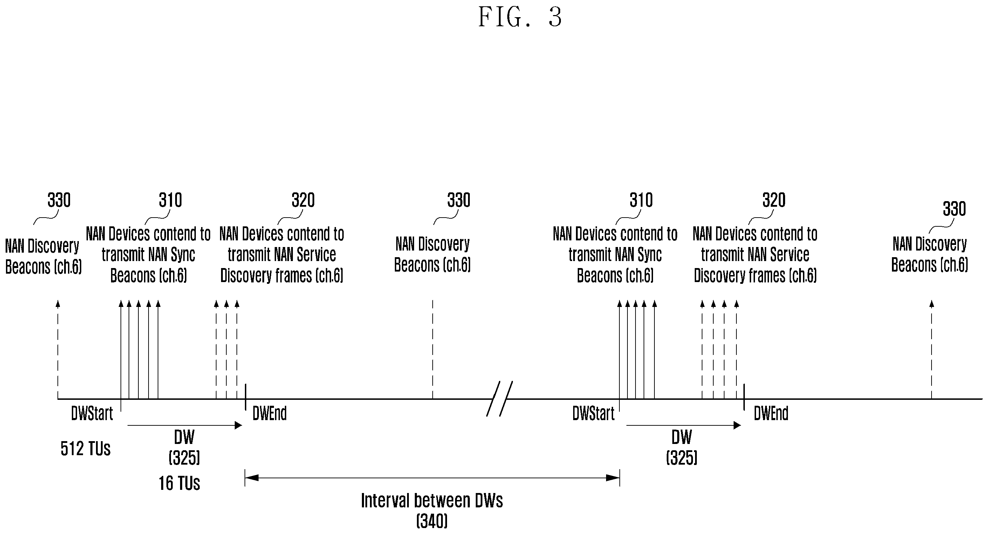

According to various embodiments, the electronic devices 101, 210, 220, and/or 230 included in the NAN cluster 200 may perform discovery, synchronization, and/or data exchange operations using a protocol illustrated in FIG. 3 described below.

FIG. 3 is a diagram illustrating a protocol for transmitting signals of an electronic device included in a NAN cluster according to various embodiments. According to various embodiments, FIG. 3 is a diagram illustrating an example of a discovery window. In FIG. 3, it may be illustrated that electronic devices (e.g., the electronic devices 101, 210, 220, and/or 230 of FIG. 2) included in one NAN cluster (e.g., the NAN cluster 200 of FIG. 2) transmit signals through a specific channel (e.g., channel 6 (Ch6) and/or channel 149 (Ch149)) based on a NAN standard.

According to various embodiments, the electronic devices 101, 210, 220 and/or 230 included in one NAN cluster (e.g., the NAN cluster 200 of FIG. 2) may transmit a sync beacon 310 and an SDF 320 in a synchronized discovery window 325. A discovery beacon 330 may be transmitted by at least one electronic device 101, 210, 220 and/or 230 in another interval 340 (e.g., an interval between discovery windows) other than the discovery window 325. According to one embodiment, the electronic devices 101, 210, 220 and/or 230 may transmit the sync beacon 310 and the SDF 320 on a contention basis. For example, the sync beacon 310 and the SDF 320 may be transmitted on the contention basis between the respective electronic devices 101, 210, 220 and/or 230 belonging to a NAN cluster (e.g., the NAN cluster 200 of FIG. 2).

According to various embodiments, the electronic devices 101, 210, 220, and/or 230 included in one NAN cluster (e.g., the NAN cluster (200) of FIG. 2) may transmit and/or receive NAFs in the discovery window 325. For example, the NAF may include at least one of information related to configuring of a NAN data path (NDP), information related to scheduling update, or information related to NAN ranging to perform data communication in the interval (340) between the discovery windows (325).

According to various embodiments, the discovery window 325 may be a period during which the electronic devices 101, 210, 220, and/or 230 is activated from communication idle state (e.g., a sleep state) that is a power-saving mode, to communication state (e.g., a wake-up state) for the purpose of data exchange between the electronic devices 101, 210, 220, and/or 230. For example, the discovery window 325 may be divided into time units (TUs) which are millisecond units. According to one embodiment, the discovery window 325 for transmitting and receiving the sync beacon 310 and the SDF 320 may occupy 16 time units (16 TUs) and may have a cycle (or interval) that repeats with 512 time units (512 TUs).

According to various embodiments, the discovery beacon 330 may represent a signal transmitted so that other electronic devices that have not joined the NAN cluster (e.g., the NAN cluster 200 of FIG. 2) can discover the NAN cluster. For example, the discovery beacon 330 is a signal for notifying the existence of the NAN cluster, and the electronic devices that have not joined the NAN cluster may perform passive scanning to receive the discovery beacon 330, thereby discovering and joining the NAN cluster.

According to various embodiments, the discovery beacon 330 may include information necessary to synchronize with the NAN cluster (e.g., the NAN cluster 200 of FIG. 2). For example, the discovery beacon 330 may include at least one of a frame control (FC) field indicating the function of a signal (e.g., a beacon), a broadcast address, a media access control (MAC) address of a transmission electronic device, a cluster identifier (ID), a sequence control field, a time stamp for a beacon frame, a beacon interval indicating a transmission interval of the discovery beacon 330, or capability information about an electronic device transmitting the discovery beacon 330.

According to various embodiments, the discovery beacon 330 may include at least one proximity network (or NAN cluster) related information element. In one embodiment, the proximity network-related information may be referred to as attribute information.

According to various embodiments, the sync beacon 310 may indicate a signal for maintaining synchronization between the sync electronic devices 101, 210, 220, and/or 230 within the NAN cluster (e.g., the NAN cluster 200 of FIG. 2). The sync beacon 310 may be transmitted by the sync device among the electronic devices 1101, 210, 220, and/or 230 within the NAN cluster. For example, the sync device may include an anchor master device, a master device, or a non-master sync device defined in the NAN standard.

According to various embodiments, the sync beacon 310 may include information necessary for the electronic devices 101, 210, 220, and/or 230 to be synchronized within the NAN cluster (e.g., the NAN cluster 200 of FIG. 2). For example, the sync beacon 310 may include at least one of an FC field indicating the function of a signal (e.g., a beacon), a broadcast address, a MAC address of a transmission electronic device, a cluster ID, a sequence control field, a timestamp for a beacon frame, a beacon interval indicating the interval between the start points of the discovery windows 325, or capability information for a transmission electronic device. According to one embodiment, the sync beacon 310 may include at least one proximity network (or NAN cluster) related information element. For example, the proximity network-related information may include contents for a service provided through the proximity network.

According to various embodiments, the SDF 320 may represent a signal for exchanging data through the proximity network. According to one embodiment, the SDF 320 represents a vendor specific public action frame and may include various fields. For example, the SDF 320 may include a category or action field and include at least one piece of proximity network-related information.

According to various embodiments, the sync beacon 310, the SDF 320, and the discovery beacon 330 may include proximity network-related information. In one embodiment, the proximity network-related information may include an ID indicating a type of information, a length of the information, and a body field that is the corresponding information. According to one embodiment, the corresponding information may include at least one piece of master indication information, cluster information, service ID list information, service descriptor information, connection capability information, wireless LAN infrastructure information, peer to peer (P2P) operation information, independent basic service set (IBSS) information, mesh information, further proximity network service discovery information, further availability map information, country code information, ranging information, cluster discovery information, or vendor specific information.

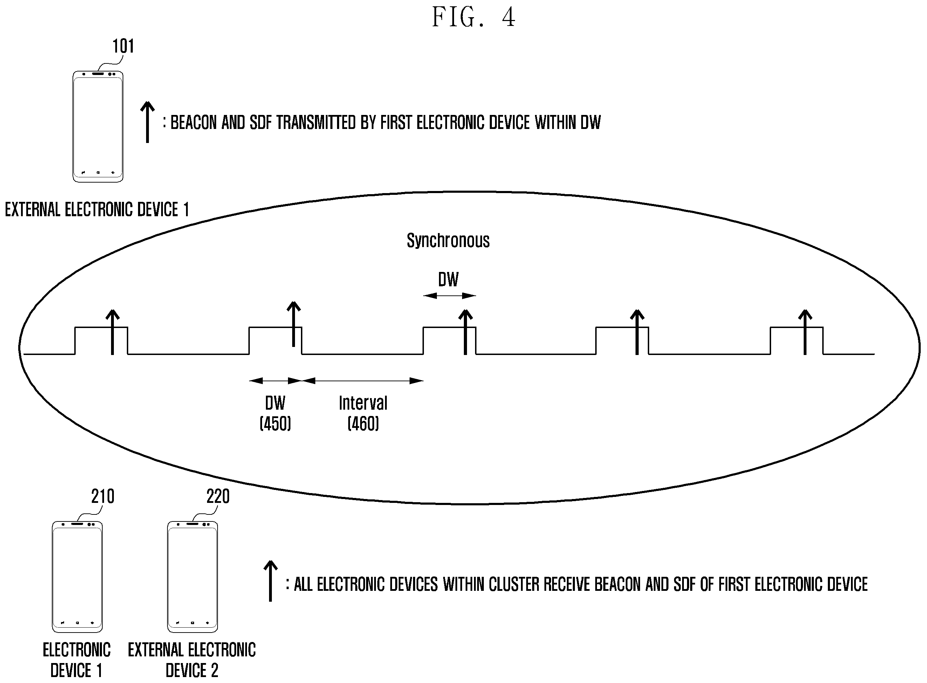

FIG. 4 is a diagram illustrating an example of data transmission and/or reception within a NAN cluster according to various embodiments.

According to various embodiments, FIG. 4 illustrates an example in which an electronic device 101, an external electronic device 1 210, and an external electronic device 2 220 form a single NAN cluster (e.g., the NAN cluster 200 of FIG. 2) through a wireless short-range communication technology, and each of the electronic devices 101, 210, and/or 220 may transmit and/or receive a beacon, an SDF, and/or an NAF to each other. According to one embodiment, FIG. 4 illustrates an example in which the electronic device 101 among the electronic devices 101, 210, and/or 220 forming the NAN cluster performs the role of a master electronic device.

According to various embodiments, the electronic device 101 may transmit a beacon, an SDF, and/or an NAF within a discovery window 450. The electronic device 101 may broadcast the beacon, the SDF, and/or the NAF every discovery window 450 that is repeated every predetermined interval (e.g., interval 460).

According to various embodiments, the external electronic device 1 210 and the external electronic device 2 220 may receive the beacon, the SDF, and/or the NAF transmitted by the electronic device 101. According to one embodiment, each of the external electronic device 1 210 and the external electronic device 2 220 may receive the broadcast beacon, the SDF, and/or the NAF from the electronic device 101 every discovery window 450.

According to various embodiments, the beacon transmitted within the discovery window 450 may include a sync beacon and include information for maintaining synchronization between the electronic devices 101, 210, and/or 220. For example, the external electronic device 1 210 and/or the external electronic device 2 220 may perform NAN cluster synchronization based on time clock information of the electronic device 101 included in the beacon transmitted by the electronic device 101 operating as a master. The external electronic device 1 210 and/or the external electronic device 2 220 may be synchronized based on the time clock information of the electronic device 101, so that the discovery window 450 may be activated at the same time.

According to various embodiments, in an interval other than the discovery window 450 (e.g., interval 460), the electronic devices 101, 210, and/or 220 may maintain communication idle state (e.g., a sleep state) to reduce current consumption. According to one embodiment, the electronic devices 101, 210, and/or 220 may operate in communication state (e.g., a wake state) only in the discovery window 450 based on a synchronized time clock to reduce current consumption.

According to various embodiments, in the interval other than the discovery window 450 (e.g., interval 460), the electronic devices 101, 210 and/or 220 may perform additional communication by configuring an active time slot. According to one embodiment, the electronic devices 101, 210 and/or 220 may transmit and/or receive SDFs that were not transmitted and/or received within the discovery window 450 through the active time slot. According to one embodiment, the electronic devices 101, 210 and/or 220 may perform a connection using legacy Wi-Fi or discovery operation through the active time slot by designating an operation for Wi-Fi Direct, mesh, IBSS, WLAN, Bluetooth or NFC connection in the active time slot.

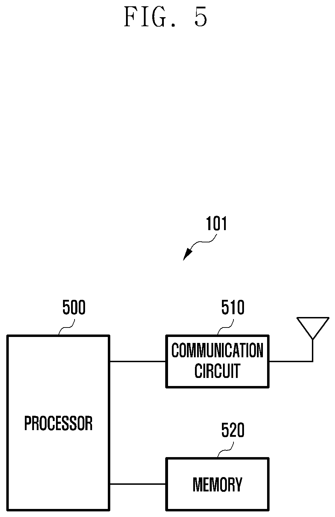

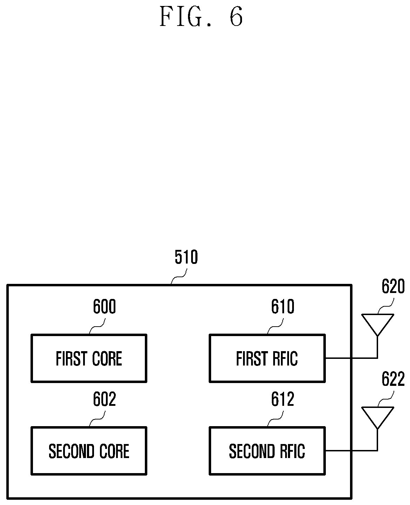

FIG. 5 is a block diagram of an electronic device for NAN communication according to an embodiment. FIG. 6 is a block diagram of a communication circuit for WLAN communication according to an embodiment. For example, the electronic device 101 in FIG. 5 may be at least partially similar to the electronic device 101 in FIG. 1, FIG. 2, FIG. 3, or FIG. 4, or may include another embodiment of the electronic device. For example, a communication circuit 510 of FIG. 6 may include two cores 600 and 602. However, the number of cores included in the communication circuit 510 is not limited thereto, and three or more cores may be included. For example, an external electronic device may include the same components as the electronic devices in FIG. 5 and/or FIG. 6 or may include at least some similar components.

According to an embodiment referring to FIGS. 5 and 6, the electronic device 101 may include at least one of a processor 500, a communication circuit (or communication circuitry) 510, or memory 520. For example, the processor 500 may be substantially the same as the processor 120 of FIG. 1 or may be included in the processor 120. The communication circuit 510 may be substantially the same as the wireless communication module 192 of FIG. 1 or included in the wireless communication module 192. The memory 520 may be substantially the same as the memory 130 of FIG. 1 or may be included in the memory 130. For example, the processor 500 may include at least one of an application processor or a communication processor. For example, the processor 500 may be operatively, functionally, and/or electrically connected to at least one of the communication circuit 510 or the memory 520. For example, the processor 500 may include at least one processor including processing circuitry.

According to an embodiment, the communication circuit 510 may support WLAN communication of the electronic device 101 and an external device (e.g., the external electronic device 210, 220, and/or 230 in FIG. 2, FIG. 3, or FIG. 4). For example, the communication circuit 510 may include a plurality of cores 600 and 602 for processing baseband signals for WLAN communication and a plurality of radio frequency (RF) integrated circuits (RFICs) 610 and 612 for processing RF signals for WLAN communication.

For example, the first core (or first communication circuit) 600 and the second core (or second communication circuit) 602 may process baseband signals for WLAN communication transmitted and/or received through different frequency bands. For example, the first core 600 may process baseband signals in a band of about 2.4 GHz and/or a band of about 5 GHz band. For example, the second core 602 may process baseband signals in a band of about 5 GHz and/or a band of about 6 GHz. For example, the first core 600 and the second core 602 may be distinguished logically (e.g., by software) within one hardware device. For example, the first core 600 and the second core 602 may be configured as different circuits or different hardware.

For example, the first RFIC 610 and the second RFIC 612 may process RF signals for WLAN communication transmitted and/or received through different frequency bands. For example, the first RFIC 610 may process RF signals in a band of about 2.4 GHz and/or a band of about 5 GHz transmitted and/or received through a first antenna 620. For example, the second RFIC 612 may process RF signals in a band of about 5 GHz and/or a band of about 6 GHz transmitted and/or received through a second antenna 622. For example, the first RFIC 610 and the second RFIC 612 may be configured as different circuits or different hardware.

For example, the communication circuit 510 may support a plurality of WLAN protocols. For example, the communication circuit 510 may perform WLAN communication with the external electronic device, based on a first wireless LAN protocol. For example, the first WLAN protocol may include at least one of WLAN-based direct communication (e.g., Wi-Fi direct), mobile hotspot, or Wi-Fi legacy. For example, the Wi-Fi legacy may include a communication scheme in which the electronic device 101 performs WLAN communication through an access point (AP). For example, the electronic device 101 may access the access point (AP) and operate in a station (STA) mode in the Wi-Fi legacy. For example, the communication circuit 510 may perform WLAN communication with the external electronic device, based on the second WLAN protocol. For example, the second WLAN protocol may include NAN communication.

According to an embodiment, the processor 500 may control the communication circuit 510 to perform WLAN communication based on the first WLAN protocol through a first channel of the first frequency band. For example, the processor 500 may control the communication circuit 510 to perform WLAN communication based on the first WLAN protocol with a first external electronic device through the first channel of the first frequency band, based on the generation of an event associated with the first wireless LAN protocol. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol. For example, the communication circuit 510 may perform WLAN communication based on the first WLAN protocol through the first core 600 and the first RFIC 610 supporting the first frequency band. For example, the first frequency band may include one of a band of about 2.4 GHz, a band of about 5 GHz, and a band of about 6 GHz.

According to an embodiment, when an event related to the second WLAN protocol is generated during the WLAN communication based on the first WLAN protocol, the processor 500 may control the communication circuit 510 to perform WLAN communication (for example, NAN communication) based on the second WLAN protocol with the second external electronic device through a plurality of channels identified (or selected) based on the first channel of the WLAN communication based on the first WLAN protocol. For example, the event related to the second WLAN protocol may be generated based on the execution of an application program or function related to the second WLAN protocol, the reception of an input (e.g., a touch input, a gesture input, or a voice input) related to the second WLAN protocol, or the reception of a control signal related to the second WLAN protocol. For example, the control signal related to the second WLAN protocol may be received from the second external electronic device through out of band (OOB) communication. For example, the OOB communication is a communication scheme different from the NAN communication and may be used for transmission and/or reception of information related to the NAN communication. For example, the communication scheme different from the NAN communication may include at least one of Bluetooth, Bluetooth low energy (BLE), near field communication (NFC), quick response (QR), or the first WLAN protocol (e.g., Wi-Fi legacy, Wi-Fi direct (or Wi-Fi P2P), or mobile hotspot).

For example, the processor 500 may identify a channel capable of performing WLAN communication of the second WLAN protocol simultaneously with the first WLAN protocol among predetermined channels (e.g., social channels) related to the second WLAN protocol, based on the first channel of the first WLAN protocol. For example, a channel capable of performing WLAN communication of the second WLAN protocol may include a second channel of the second frequency band supported by the second core 602 among predetermined channels related to the second WLAN protocol when the WLAN communication of the first WLAN protocol is performed through the first core 600 of the communication circuit 510. For example, the predetermined channels related to the second WLAN protocol are used by the NAN protocol for each service area (e.g., country) and may include channels related to preconfigured WLAN communication. For example, the predetermined channels related to the second WLAN protocol may include channel 6 of the second frequency band (e.g., a band of about 2.4 GHz) and/or channel 149 of the first frequency band (e.g., a band of about 5 GHz). For example, the predetermined channels related to the second WLAN protocol may include channel 6 of the second frequency band (e.g., a band of about 2.4 GHz) and/or channel 44 of the first frequency band (e.g., a band of about 5 GHz). For example, the second frequency band may include any one of the band of about 2.4 GHz, the band of about 5 GHz, and the band of 6 GHz that is different from the first frequency band.

For example, the processor 500 may control the communication circuit 510 (e.g., the first core 600 and the second core 602) to perform WLAN communication (e.g., NAN communication) based on the second WLAN protocol with the second external electronic device through the first channel of the first frequency band and the second channel of the second frequency band. For example, the processor 500 may control the communication circuit 510 to configure a NAN cluster for NAN communication through the first channel of the first frequency band and the second channel of the second frequency band. For example, the configuration of the NAN cluster may include a series of operations for configuring a discovery window (DW) in the second channel of the second frequency band and the first channel of the first frequency band, and transmitting a beacon (e.g., a sync beacon or a discovery beacon) within each of the discovery windows or between discovery windows of the same channel. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the first channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through OOB communication. For example, the information related to the WLAN communication based on the second WLAN protocol may be transmitted to the second external electronic device through the NAN communication of second channel.

For example, the processor 500 may control the communication circuit 510 to perform WLAN communication (e.g., NAN communication) based on the second WLAN protocol with the second external electronic device through the NAN cluster based on the second channel of the second frequency band and the first channel of the first frequency band while performing WLAN communication based on the first WLAN protocol with the first external electronic device, based on the first channel of the first frequency band.

According to an embodiment, the processor 500 may control the communication circuit 510 to perform WLAN communication based on the second WLAN protocol through a third channel of the first frequency band and the second channel of the second frequency band. For example, the processor 500 may control the communication circuit 510 to perform WLAN communication based on the second WLAN protocol with the second external electronic device through the NAN cluster configured through the second channel (e.g., channel 6) of the second frequency band (e.g., a band of about 2.4 GHz) and the third channel (e.g., channel 144) of the first frequency band (e.g., a band of about 5 GHz), based on the generation of an event related to the second WLAN protocol. For example, the second channel and the third channel may be included in predetermined channels to perform WLAN communication of the second WLAN protocol. For example, the event related to the second WLAN protocol may be generated based on the execution of an application program or function related to the second WLAN protocol, the reception of an input (e.g., a touch input, a gesture input, or a voice input) related to the second WLAN protocol, or the reception of a control signal related to the second WLAN protocol.

According to an embodiment, when an event related to the first WLAN protocol is generated while WLAN communication based on the second WLAN protocol is performed, the processor 500 may control the communication circuit 510 to perform WLAN communication based on the first WLAN protocol with the first external electronic device through the first channel of the first frequency band. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol.

According to an embodiment, the processor 500 may control the communication circuit 510 to change some of the channels of the WLAN communication (e.g., NAN communication) based on the second WLAN protocol with the second external electronic device, based on the first channel of the WLAN communication based on the first WLAN protocol. For example, the processor 500 may identify a channel capable of performing the WLAN communication of the second WLAN protocol simultaneously with the first WLAN protocol among channels (e.g., channel 6 and/or channel 149) used for the WLAN communication of the second WLAN protocol, based on the first channel of the first WLAN protocol. For example, the channel capable of performing the WLAN communication of the second WLAN protocol may include the second channel (e.g., channel 6) of the second frequency band supported by the second core 602 among the channels used for the WLAN communication of the second WLAN protocol when the WLAN communication of the first WLAN protocol is performed through the first core 600 of the communication circuit 510.

For example, the processor 500 may control the communication circuit 510 (or the second core 602) to maintain the WLAN communication based on the second WLAN protocol with the second external electronic device through the second channel of the second frequency band.

For example, the processor 500 may control the communication circuit 510 (or the first core 600) to change the third channel of the first frequency band to the first channel among channels used for the WLAN communication of the second WLAN protocol, based on the first channel of the first WLAN protocol. For example, the processor 500 may control the communication circuit 510 (or the first core 600) to configure a discovery window (DW) of the first channel of the first frequency band, based on a change in the channel being used for the WLAN communication (e.g., NAN communication) based on the second WLAN protocol and transmit a beacon (e.g., a synchronization beacon or a search beacon) within the discovery window or between discovery windows For example, a discovery window of the first channel of the first frequency band may be configured to be delayed (or separated) by a predetermined time interval (e.g., offset) from a discovery window of the second channel of the second frequency band.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the first channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel.

For example, the processor 500 may control the communication circuit 510 to perform WLAN communication (e.g., NAN communication) based on the second WLAN protocol with the second external electronic device through the NAN cluster based on the second channel of the second frequency band and the first channel of the first frequency band while performing WLAN communication based on the first WLAN protocol with the first external electronic device, based on the first channel of the first frequency band.

According to an embodiment, the communication circuit 510 may perform the WLAN communication based on the first WLAN protocol and the WLAN communication based on the second WLAN protocol at the same time by configuring (or changing) the channels of the second WLAN protocol, based on the first channel of the first WLAN protocol. For example, the first core 600 of the communication circuit 510 may simultaneously perform the WLAN communication of the first WLAN protocol and the WLAN communication of the second WLAN protocol through the first channel of the first frequency band. For example, the first core 600 of the communication circuit 510 may sequentially transmit data related to the first WLAN protocol or data related to the second WLAN protocol through the first channel of the first frequency band, based on the generation order of the data related to the first WLAN protocol and the data related to the second WLAN protocol. For example, the second core 602 of the communication circuit 510 may perform the WLAN communication of the second WLAN protocol through the second channel of the second frequency band.

According to an embodiment, when the WLAN communication based on the first WLAN protocol is terminated during the WLAN communication based on the first WLAN protocol and the WLAN communication based on the second WLAN protocol, the processor 500 may control the communication circuit 510 to change some of the channels (e.g., channel 6 and channel 36) of the WLAN communication (e.g., NAN communication) based on the second WLAN protocol. For example, when the WLAN communication based on the first WLAN protocol is terminated, the processor 500 may identify whether there is a channel different from the channel designated to perform the WLAN communication of the second WLAN protocol among the channels (e.g., channel 6 and/or channel 149) for the WLAN communication of the second WLAN protocol configured based on the first channel of the first WLAN protocol. For example, when there is the first channel different from the channel designated to perform the WLAN communication of the second WLAN protocol, the processor 500 may determine (or decide) that the first channel is changed to the third channel (for example, channel 144) of the first frequency band designated for the WLAN communication of the second WLAN protocol.

For example, the processor 500 may control the communication circuit 510 (or the second core 602) to maintain the WLAN communication based on the second WLAN protocol with the second external electronic device through the second channel of the second frequency band.

For example, the processor 500 may control the communication circuit 510 (or the first core 600) to change the first channel of the first frequency band to the third channel among the channels used for the WLAN communication of the second WLAN protocol. As an example, the processor 500 may control the communication circuit 510 (or the first core 600) to configure a discovery window (DW) of the third channel of the first frequency band, based on a change in the channel being used for the WLAN communication (e.g., NAN communication) based on the second WLAN protocol and transmit a beacon (e.g., a synchronization beacon or a search beacon) within the discovery window or between discovery windows For example, a discovery window of the third channel of the first frequency band may be configured to be delayed (or separated) by a predetermined time interval (e.g., offset) from a discovery window of the second channel of the second frequency band.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the third channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel.

According to an embodiment, the memory 520 may store various data used by at least one component (e.g., the processor 500 or the communication circuit 510) of the electronic device 101. For example, the memory 520 may store various instructions which may be executed individually or collectively through the processor 500 (e.g., at least one processor).

According to an embodiment, when the WLAN communication based on the first WLAN protocol is terminated during the WLAN communication based on the first WLAN protocol and the WLAN communication based on the second WLAN protocol, the electronic device 101 may maintain the channels (e.g., channel 6 and channel 36) of the WLAN communication (e.g., NAN communication) based on the second WLAN protocol configured based on the first channel of the first WLAN protocol.

According to an embodiment, an electronic device (e.g., the electronic device 101 in FIG. 1, FIG. 2, FIG. 3, FIG. 4, FIG. 5, or FIG. 6) may include a communication circuit (e.g., the wireless communication module 192 in FIG. 1 or the communication circuit 510 in FIG. 5 or FIG. 6) configured to perform WLAN communication, at least one processor (e.g., the processor 120 in FIG. 1 or the processor 500 in FIG. 5) including a processing circuit, and a memory (e.g., the memory 130 in FIG. 1 or the memory 520 in FIG. 5) operatively connected to the at least one processor. According to an embodiment, the memory may be configured to store instructions causing, when individually or collectively executed by the at least one processor, the electronic device to perform WLAN communication of a first WLAN protocol with a first external electronic device by using a first channel of a first frequency band through the communication circuit. According to an embodiment, the memory may be configured to store instructions causing, when executed individually or collectively by at least one processor, the electronic device to perform, based on the performance of the WLAN communication of the first WLAN protocol with the first external electronic device using the first channel, WLAN communication of a second WLAN protocol with a second external electronic device by using the first channel of the first frequency band and a second channel of a second frequency band different from the first frequency band, during the performance of the WLAN communication of the first WLAN protocol with the first external electronic device using the first channel.

According to an embodiment, the WLAN communication of the first WLAN protocol may include WLAN-based direct communication (e.g., Wi-Fi direct) with the first external electronic device using channel 36 in the band of 5 GHz. According to an embodiment, the WLAN communication of the second WLAN protocol may include neighbor awareness networking (NAN) communication with the second external electronic device using channel 36 in the band of 5 GHz and channel 6 in the band of 2.4 GHz.

According to an embodiment, the communication circuit may perform WLAN communication of the first WLAN protocol with the first external electronic device and WLAN communication of the second WLAN protocol with the second external electronic device by using the first channel of the first frequency band, and may perform WLAN communication of the second WLAN protocol with the second external electronic device by using the second channel of the second frequency band.

According to an embodiment, the memory 130 or 520 may store instructions causing, when executed individually or collectively by at least one processor 120 or 500, the electronic device 101 to perform, based on an event related to execution of the second WLAN protocol, WLAN communication of the second WLAN protocol with the second external electronic device using the first channel of the first frequency band and the second channel of the second frequency band during the WLAN communication of the first WLAN protocol with the first external electronic device using the first channel of the first frequency band.

According to an embodiment, the memory 130 or 520 may store instructions causing, when executed individually or collectively by at least one processor 120 or 500, the electronic device 101 to, when WLAN communication of the first WLAN protocol with the first external electronic device is performed using the first channel of the first frequency band during WLAN communication of the second WLAN protocol with the second external electronic device using a third channel of the first frequency band and the second channel of the second frequency band, change the third channel of the first frequency band for the WLAN communication of the second WLAN communication with the second external electronic device to the first channel of the first frequency band during the WLAN communication of the first WLAN protocol with the first external electronic device using the first channel of the first frequency band. According to an embodiment, the memory 130 or 520 may store instructions causing, when executed individually or collectively by the at least one processor 120 or 500, the electronic device 101 to, when the third channel of the first frequency band is changed to the first channel of the first frequency band, based on the WLAN communication of the first WLAN protocol with the first external electronic device using the first channel, maintain WLAN communication of the second WLAN protocol using the second channel of the second frequency band.

According to an embodiment, the memory 130 or 520 may store instructions causing, when executed individually or collectively by at least one processor 120 or 500, the electronic device 101 to configure a discovery window of the second channel. According to an embodiment, the memory 130 or 520 may store instructions causing, when executed by the processor 120 or 500, the electronic device 101 to configure a discovery window of the first channel to be delayed (or spaced) by a specified time interval from the discovery window of the second channel. According to an embodiment, the memory 130 or 520 may store instructions causing, when executed individually or collectively by the at least one processor 120 or 500, the electronic device 101 to perform WLAN communication of the second WLAN protocol with the second external electronic device, based on the discovery windows of the first and second channels.

According to an embodiment, the memory 130 or 520 may store instructions causing, when executed individually or collectively by at least one processor 120 or 500, the electronic device 101 to transmit information related to the first channel for performing WLAN communication of the second WLAN protocol and a predetermined time interval to the second external electronic device through out of band (OOB).

According to an embodiment, the memory 130 or 520 may store instructions causing, when executed individually or collectively by the at least one processor 120 or 500, the electronic device 101 to transmit information related to the first channel for performing WLAN communication of the second WLAN protocol and a predetermined time interval to the second external electronic device through the WLAN communication of the second WLAN protocol through the second channel.

According to an embodiment, the memory 130 or 520 may store instructions causing, when executed individually or collectively by the at least one processor 120 or 500, the electronic device 101 to perform WLAN communication of the first WLAN protocol with the first external electronic device and WLAN communication of the second WLAN protocol with the second external electronic device by using the first channel of the first frequency band through the first core 600 of the communication circuit 192 or 510. According to an embodiment, the memory 130 or 520 may store instructions causing, when executed individually or collectively by at least one processor 120 or 500, the electronic device 101 to perform WLAN communication of the second WLAN protocol with the second external electronic device by using the second channel of the second frequency band through the second core 602 of the communication circuit 192 or 510.

According to an embodiment, the memory 130 or 520 may store instructions causing, when executed individually or collectively by at least one processor 120 or 500, the electronic device 101 to, when WLAN communication of the first WLAN protocol with the first external electronic device is performed through the first core 600, identify the second channel of the second frequency band supported by the second core 602 from among predetermined channels related to the second WLAN protocol. According to an embodiment, the memory 130 or 520 may store instructions causing, when individually or collectively executed by at least one processor 120 or 500, the electronic device 101 to perform WLAN communication of the second WLAN protocol with the second external electronic device through the second channel of the second frequency band and the first channel of the first frequency band in the second core 602.

According to an embodiment, the memory 130 or 520 may store instructions causing, when executed individually or collectively by at least one processor 120 or 500, the electronic device 101 to identify the generation of an event related to the second WLAN protocol, based on execution of an application program or function related to the second WLAN protocol, reception of an input related to the second WLAN protocol, or reception of a control signal related to the second WLAN protocol.

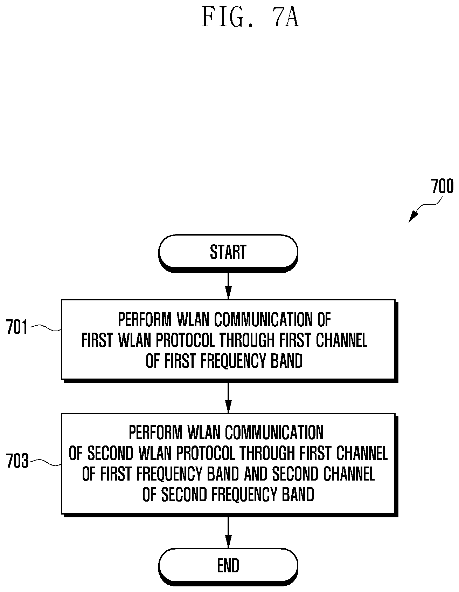

FIG. 7A is a flowchart 700 illustrating an operation for performing WLAN communication based on heterogeneous WLAN protocols by an electronic device according to an embodiment. In the following embodiments, respective operations may be sequentially performed but the sequential performance is not necessary. For example, orders of the operations may be changed, and at least two operations may be performed in parallel. For example, the electronic device in FIG. 7A may be the electronic device 101 in FIG. 1, FIG. 2, FIG. 3, FIG. 4, FIG. 5, or FIG. 6.

Referring to FIG. 7A, according to an embodiment, the electronic device (e.g., the electronic device 101) or the processor (e.g., the processor 120 in FIG. 1 or the processor 500 in FIG. 5) may perform WLAN communication based on a first WLAN protocol through a first channel of a first frequency band in operation 701. For example, the processor 500 may control the communication circuit 510 to perform WLAN communication based on the first WLAN protocol with a first external electronic device through the first channel of the first frequency band, based on the generation of an event associated with the first wireless LAN protocol. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol. For example, WLAN communication based on the first WLAN protocol may be performed by the communication circuit 510 through the first core 600 and the first RFIC 610 supporting the first frequency band. For example, the first WLAN protocol may include at least one of WLAN-based direct communication (e.g., Wi-Fi direct or Wi-Fi P2P), mobile hotspot, or Wi-Fi legacy.

According to an embodiment, the electronic device (e.g., the electronic device 101) or the processor (e.g., the processor 120 or 500) may perform WLAN communication (e.g., NAN communication) based on a second WLAN protocol with a second external electronic device through a plurality of channels identified (or selected) based on the first channel of the WLAN communication based on the first WLAN protocol in operation 703.

According to an embodiment, when an event related to the second WLAN protocol is generated during WLAN communication based on the first WLAN protocol, the processor 500 may identify a plurality of channels for WLAN communication based on the second WLAN protocol, based on the first channel of the WLAN communication based on the first WLAN protocol. For example, the processor 500 may identify a channel capable of performing WLAN communication of the second WLAN protocol simultaneously with the first WLAN protocol among predetermined channels (e.g., social channels) related to the second WLAN protocol, based on the first channel of the first WLAN protocol. For example, when the WLAN communication of the first WLAN protocol is performed through the first core 600 of the communication circuit 510, the processor 500 may select, as a channel for performing the WLAN communication of the second WLAN protocol, the second channel of the second frequency band supported by the second core 602 among predetermined channels related to the second WLAN protocol. For example, the predetermined channels related to the second WLAN protocol are used by the NAN protocol for each service area (e.g., country) and may include channels related to preconfigured WLAN communication.

For example, the processor 500 may control the communication circuit 510 (e.g., the first core 600 and the second core 602) to perform WLAN communication (e.g., NAN communication) based on the second WLAN protocol with the second external electronic device through the first channel of the first frequency band and the second channel of the second frequency band. For example, the processor 500 may control the communication circuit 510 to configure a NAN cluster for NAN communication through the first channel of the first frequency band and the second channel of the second frequency band. For example, the configuration of the NAN cluster may include a series of operations for configuring a discovery window (DW) in the first channel of the first frequency band and the second channel of the second frequency band, and transmitting a beacon (e.g., a sync beacon or a discovery beacon) within each discovery window or between discovery windows of the same channel. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the first channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel.

For example, the processor 500 may control the communication circuit 510 to perform WLAN communication (e.g., NAN communication) based on the second WLAN protocol with the second external electronic device with the second external electronic device through the NAN cluster based on the second channel of the second frequency band and the first channel of the first frequency band.

According to an embodiment, when WLAN communication based on the first WLAN protocol is performed during WLAN communication based on the second WLAN protocol, the processor 500 may control the communication circuit 510 to change some of the channels for the WLAN communication based on the second WLAN protocol, based on the first channel of the WLAN communication based on the first WLAN protocol. For example, the processor 500 may identify a channel capable of performing the WLAN communication of the second WLAN protocol simultaneously with the first WLAN protocol among channels (e.g., channel 6 and/or 149) used for the WLAN communication of the second WLAN protocol, based on the first channel of the first WLAN protocol. For example, the channel capable of performing the WLAN communication of the second WLAN protocol may include the second channel (e.g., channel 6) of the second frequency band supported by the second core 602 among the channels used for the WLAN communication of the second WLAN protocol when the WLAN communication of the first WLAN protocol is performed through the first core 600 of the communication circuit 510.

For example, the processor 500 may control the communication circuit 510 (or the second core 602) to maintain the WLAN communication based on the second WLAN protocol with the second external electronic device through the second channel of the second frequency band. The processor 500 may maintain the WLAN communication based on the second WLAN protocol with the second external electronic device using the second channel of the second frequency band, thereby maintaining the WLAN communication based on the second WLAN protocol with external electronic devices that use the predetermined channel related to the second WLAN protocol.

For example, the processor 500 may control the communication circuit 510 (or the first core 600) to change the third channel of the first frequency band to the first channel among channels used for the WLAN communication of the second WLAN protocol, based on the first channel of the first WLAN protocol. For example, the processor 500 may control the communication circuit 510 (or the first core 600) to configure a discovery window (DW) of the first channel of the first frequency band, based on a change in the channel being used for the WLAN communication (e.g., NAN communication) based on the second WLAN protocol and transmit a beacon (e.g., a synchronization beacon or a search beacon) within the discovery window or between discovery windows For example, a discovery window of the first channel of the first frequency band may be configured to be delayed (or separated) by a predetermined time interval (e.g., offset) from a discovery window of the second channel of the second frequency band.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the first channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel.

For example, the processor 500 may control the communication circuit 510 to perform WLAN communication (e.g., NAN communication) with the second external electronic device, based on the second WLAN protocol with the second external electronic device through the NAN cluster based on the second channel of the second frequency band and the first channel of the first frequency band.

According to an embodiment, the electronic device 101 may perform WLAN communication based on the first WLAN protocol and WLAN communication based on the second WLAN protocol at the same time by configuring (or changing) channels of the second WLAN protocol, based on the first channel of the first frequency band of the first WLAN protocol. For example, the first core 600 of the communication circuit 510 may simultaneously perform the WLAN communication of the first WLAN protocol and the WLAN communication of the second WLAN protocol through the first channel of the first frequency band. For example, the second core 602 of the communication circuit 510 may perform the WLAN communication of the second WLAN protocol through the second channel of the second frequency band.

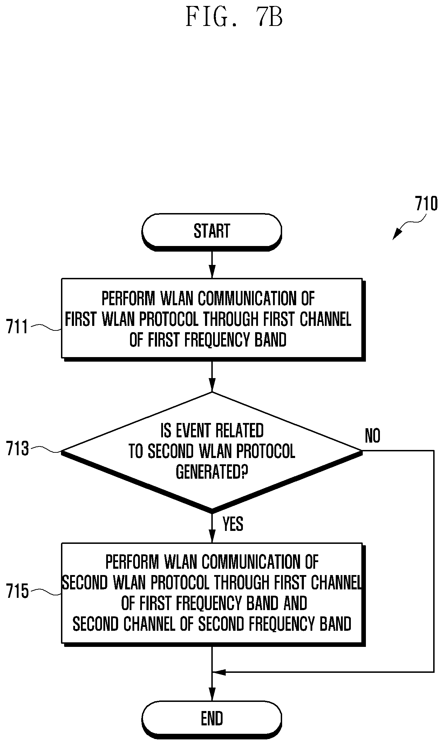

FIG. 7B is a flowchart 710 illustrating an operation for performing WLAN communication based on heterogeneous WLAN protocols by an electronic device according to an embodiment. In the following embodiments, respective operations may be sequentially performed but the sequential performance is not necessary. For example, orders of the operations may be changed, and at least two operations may be performed in parallel. For example, the electronic device in FIG. 7B may be the electronic device 101 in FIG. 1, FIG. 2, FIG. 3, FIG. 4, FIG. 5, or FIG. 6.

According to an embodiment referring to FIG. 7B, the electronic device (for example, the electronic device 101) or the processor (for example, the processor 120 in FIG. 1 or the processor 500 in FIG. 5) may perform WLAN communication based on a first WLAN protocol through a first channel of a first frequency band in operation 711. For example, the processor 500 may control the communication circuit 510 to perform WLAN communication based on the first WLAN protocol with a first external electronic device through the first channel of the first frequency band, based on the generation of an event related to the first wireless LAN protocol. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol. For example, WLAN communication based on the first WLAN protocol may be performed by the communication circuit 510 through the first core 600 and the first RFIC 610 supporting the first frequency band. For example, the first WLAN protocol may include at least one of WLAN-based direct communication (e.g., Wi-Fi direct or Wi-Fi P2P), mobile hotspot, or Wi-Fi legacy.

According to an embodiment, the electronic device (for example, the electronic device 101) or the processor (for example, the processor 120 or 500) may identify whether an event related to the second WLAN protocol is generated during WLAN communication based on the first WLAN protocol in operation 713. For example, the event related to the second WLAN protocol may be generated based on the execution of an application program or function related to the second WLAN protocol, the reception of an input (e.g., a touch input, a gesture input, or a voice input) related to the second WLAN protocol, or the reception of a control signal related to the second WLAN protocol. For example, the control signal related to the second WLAN protocol may be received from the second external electronic device through out of band (OOB) communication. For example, the OOB communication is a communication scheme different from the NAN communication and may be used for transmission and/or reception of information related to the NAN communication. For example, the communication scheme different from the NAN communication may include at least one of Bluetooth, Bluetooth low energy (BLE), near field communication (NFC), quick response (QR), or the first WLAN protocol (e.g., Wi-Fi legacy, mobile hotspot, or Wi-Fi direct).

According to an embodiment, when an event related to the second WLAN protocol is not generated (e.g., "No" in operation 713), the electronic device (e.g., the electronic device 101) or the processor (e.g., the processor 120 or 500) may terminate an embodiment for performing WLAN communication based on the heterogeneous WLAN protocols. For example, when the event related to the second WLAN protocol is not generated, the processor 500 may control the communication circuit 510 to maintain WLAN communication based on the first WLAN protocol through the first channel of the first frequency band.

According to an embodiment, when the event related to the second WLAN protocol is generated (e.g., "Yes" in operation 713), the electronic device (e.g., the electronic device 101) or the processor (e.g., the processor 120 or 500) may perform WLAN communication based on the second WLAN protocol (e.g., NAN communication) with the second external electronic device through a plurality of channels identified (or selected) based on the first channel of the WLAN communication based on the first WLAN protocol in operation 715. For example, the processor 500 may identify a channel capable of performing WLAN communication of the second WLAN protocol simultaneously with the first WLAN protocol among predetermined channels (e.g., social channels) related to the second WLAN protocol, based on the first channel of the first WLAN protocol. For example, when the WLAN communication of the first WLAN protocol is performed through the first core 600 of the communication circuit 510, the processor 500 may select, as a channel for performing the WLAN communication of the second WLAN protocol, the second channel of the second frequency band supported by the second core 602 among predetermined channels related to the second WLAN protocol. For example, the predetermined channels related to the second WLAN protocol may include channel 6 and/or channel 149 related to preconfigured WLAN communication as channels used by the NAN protocol in a specific service area (e.g., a specific country).

For example, the processor 500 may control the communication circuit 510 (e.g., the first core 600 and the second core 602) to configure a NAN cluster through the first channel of the first frequency band and the second channel of the second frequency band. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in an eleventh channel of the first frequency band and transmitting a beacon (e.g., a synchronization beacon or a discovery beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

For example, the processor 500 may control the communication circuit 510 to transmit information related to WLAN communication based on the second WLAN protocol to the second external electronic device. For example, the information related to the WLAN communication based on the second WLAN protocol may include at least one of information related to the first channel of the first frequency band configured to perform the WLAN communication based on the second WLAN protocol, information related to the second channel of the second frequency band, or information related to the predetermined time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel.

For example, the processor 500 may control the communication circuit 510 to perform WLAN communication (e.g., NAN communication) based on the second WLAN protocol with the second external electronic device through the NAN cluster based on the second channel of the second frequency band and the first channel of the first frequency band.

According to an embodiment, the electronic device 101 may perform WLAN communication based on the first WLAN protocol and WLAN communication based on the second WLAN protocol at the same time by configuring (or changing) channels of the second WLAN protocol, based on the first channel of the first frequency band of the first WLAN protocol, and . For example, the first core 600 of the communication circuit 510 may simultaneously perform the WLAN communication of the first WLAN protocol and the WLAN communication of the second WLAN protocol through the first channel of the first frequency band. For example, the second core 602 of the communication circuit 510 may perform the WLAN communication of the second WLAN protocol through the second channel of the second frequency band.

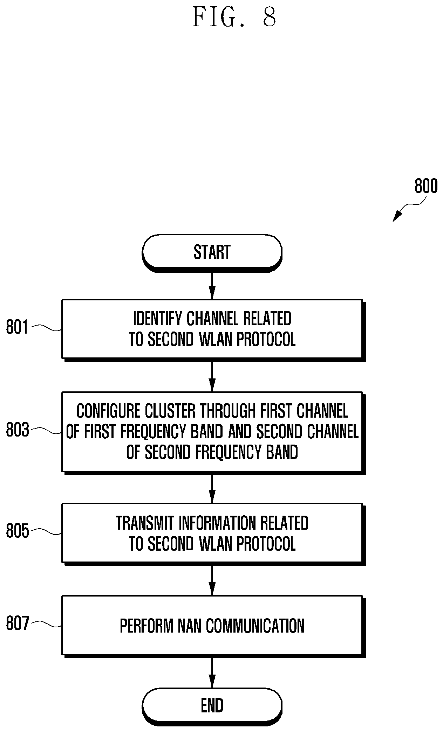

FIG. 8 is a flowchart 800 illustrating an operation for performing NAN communication based on a first WLAN protocol by an electronic device according to an embodiment. For example, at least some of FIG. 8 may include detailed operations of operation 715 in FIG. 7B. In the following embodiments, respective operations may be sequentially performed but the sequential performance is not necessary. For example, orders of the operations may be changed, and at least two operations may be performed in parallel. For example, the electronic device of FIG. 8 may be the electronic device 101 of FIG. 1, 2, 3, 4, 5, or 6.

According to an embodiment referring to FIG. 8, when an event related to a second WLAN protocol is generated during WLAN communication of a first WLAN protocol (for example, "Yes" in operation 713 of FIG. 7), the electronic device (for example, the electronic device 101) or the processor (for example, the processor 120 in FIG. 1 or the processor 500 in FIG. 5) may identify channels for WLAN communication of the second WLAN protocol, based on a first channel of a first frequency band used for WLAN communication of the first WLAN protocol in operation 801. For example, when WLAN communication of the first WLAN protocol is performed through the first core 600 of the communication circuit 510, the processor 500 may select, as a channel for performing the WLAN communication of the second WLAN protocol, a second channel of the second frequency band supported by the second core 602 among predetermined channels related to the second WLAN protocol. The processor 500 may determine that the first channel of the first frequency band and the second channel of the second frequency band used for WLAN communication of the first WLAN protocol are channels for performing WLAN communication of the second WLAN protocol.

According to an embodiment, the electronic device (e.g., electronic device 101) or the processor (e.g., processor 120 or 500) may configure a NAN cluster through the first channel of the first frequency band and the second channel of the second frequency band in operation 803. For example, the processor 500 may control the communication circuit 510 (or the second core 602) to configure a discovery window (DW) in the second channel of the second frequency band and transmit a beacon (e.g., a synchronization beacon or a scanning beacon) within the discovery window or between discovery windows. For example, the processor 500 may control the communication circuit 510 (or the first core 600) to configure a discovery window (DW) in the first channel of the first frequency band and transmit a beacon (e.g., a synchronization beacon or a scanning beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

According to an embodiment, the electronic device (for example, the electronic device 101) or the processor (for example, the processor 120 or 500) may transmit information related to WLAN communication based on the second WLAN protocol to an external electronic device in operation 805. For example, the processor 500 may control the communication circuit 510 to transmit information related to WLAN communication based on the second WLAN protocol to the second external electronic device through OOB communication, based on the configuration of the NAN cluster. For example, the processor 500 may control the communication circuit 510 (e.g., the second core 602) to transmit information related to the WLAN communication based on the second WLAN protocol to the second external electronic device through the NAN communication of the second channel, based on the configuration of the NAN cluster. For example, the information related to the WLAN communication based on the second WLAN protocol may be included in a NAN-based message (e.g., SDF) transmitted to the second external electronic device through the second channel and then transmitted to the second external electronic device. For example, the information related to the WLAN communication based on the second WLAN protocol may include at least one piece of information related to the NAN cluster and information related to a predetermined time interval. For example, the information related to the NAN cluster may include information related to the second channel of the second frequency band and/or information related to the first channel of the first frequency band for the electronic device 101 to perform the WLAN communication based on the second WLAN protocol.

According to an embodiment, the electronic device (for example, the electronic device 101) or the processor (for example, the processor 120 or 500) may perform WLAN communication (for example, NAN communication) based on the second WLAN protocol with the second external electronic device through the NAN cluster based on the second channel of the second frequency band and the first channel of the first frequency band in operation 807. For example, the processor 500 may control the communication circuit 510 (e.g., the first core 600) to perform WLAN communication based on the first WLAN protocol and WLAN communication based on the second WLAN protocol through the first channel of the first frequency band. The processor 500 may control the communication circuit 510 (e.g., the second core 602) to perform WLAN communication based on the second WLAN protocol through the second channel of the second frequency band.

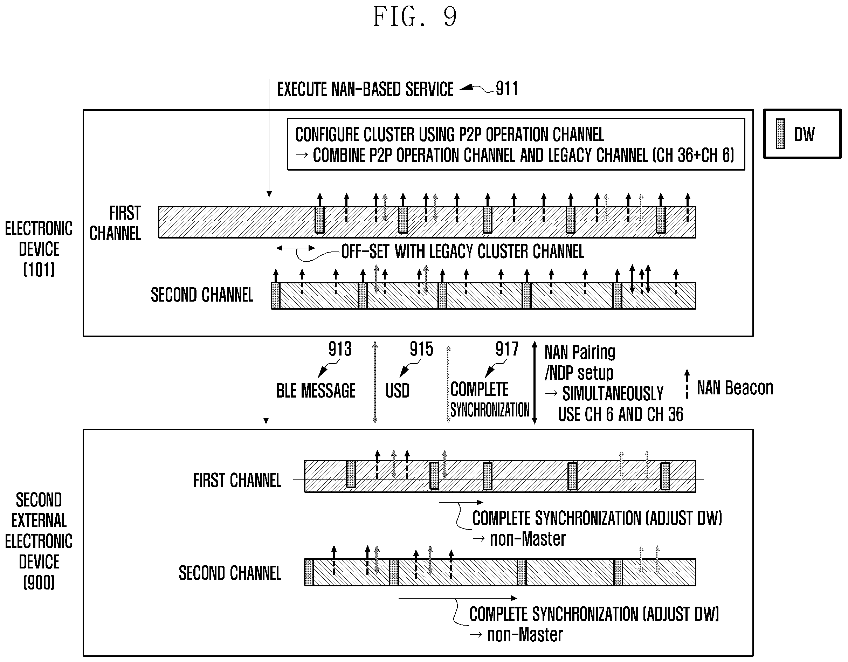

FIG. 9 is an example for performing WLAN communication based on heterogeneous WLAN protocols by an electronic device according to an embodiment.

According to an embodiment in reference to FIG. 9, the electronic device 101 may perform WLAN communication based on a first WLAN protocol with a first external electronic device through a first channel (e.g., channel 36) of a first frequency band (e.g., a band of about 5 GHz), based on the generation of an event related to the first WLAN protocol. For example, the electronic device 101 may perform WLAN communication based on the first WLAN protocol with the first external electronic device through the first core 600 and the first RFIC 610 of the communication circuit 510. For example, the first WLAN protocol may include at least one of WLAN-based direct communication (e.g., Wi-Fi direct or Wi-Fi P2P), mobile hotspot, or Wi-Fi legacy.

According to an embodiment, when an event related to the second WLAN protocol is generated during WLAN communication based on the first WLAN protocol, the electronic device 101 may configure a NAN cluster through the first channel of the first frequency band used for WLAN communication based on the first WLAN protocol and a second channel (e.g., channel 6) of a second frequency band (e.g., a band of about 2.4 GHz) different from the first frequency band in operation 911. For example, when WLAN communication of the first WLAN protocol is performed, the electronic device 101 may identify channels for performing WLAN communication of the second WLAN protocol, based on predetermined channels related to the second WLAN protocol and the first channel of the first frequency band used for the WLAN communication of the first WLAN protocol. For example, when WLAN communication of the first WLAN protocol is performed through the first core 600 of the communication circuit 510, the electronic device 101 may select, as a channel for performing WLAN communication of the second WLAN protocol, the second channel of the second frequency band supported by the second core 602 among the predetermined channels related to the second WLAN protocol. The electronic device 101 may determine that the first channel of the first frequency band and the second channel of the second frequency band used for WLAN communication of the first WLAN protocol are channels for performing WLAN communication of the second WLAN protocol.

For example, the electronic device 101 may configure a NAN cluster through the first channel of the first frequency band and the second channel of the second frequency band. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily. For example, the predetermined channels related to the second WLAN protocol may be channels that are previously configured to be used by the NAN protocol, and may include channel 6 and/or channel 149 related to WLAN communication in a specific service area. For example, the event related to the second WLAN protocol may be generated based on the execution of an application program or function related to the second WLAN protocol or the reception of an input (e.g., a touch input, a gesture input, or a voice input) related to the second WLAN protocol.

According to an embodiment, the electronic device 101 may transmit information related to WLAN communication based on the second WLAN protocol to a second external electronic device 900 through OOB communication, based on the configuration of the NAN cluster in operation 913. For example, the information related to the WLAN communication based on the second WLAN protocol may include at least one piece of information related to the NAN cluster and information related to a predetermined time interval. For example, the information related to the NAN cluster may include information related to the first channel of the first frequency band and/or information related to the second channel of the second frequency band for the electronic device 101 to perform the WLAN communication based on the second WLAN protocol.

According to an embodiment, the electronic device 101 may update (or adjust) a predetermined time interval related to the discovery window of the first channel of the first frequency band in the NAN cluster. For example, when receiving information related to WLAN communication based on the second WLAN protocol from the electronic device 101 in a state of configuring the NAN cluster through the first channel of the first frequency band, the second external electronic device 900 may transmit information related to WLAN communication based on the second WLAN protocol that is being operated by the second external electronic device 900 to the electronic device 101 through OOB communication. For example, the electronic device 101 may update (or adjust) a predetermined time interval related to a discovery window of the first channel of the first frequency band of the electronic device 101, based on the predetermined time interval of the second external electronic device 900.

According to an embodiment, the electronic device 101 may perform WLAN communication (e.g., NAN communication) based on a second WLAN protocol with the second external electronic device 900 through the NAN cluster based on the second channel of the second frequency band and the first channel of the first frequency band. For example, the WLAN communication based on the second WLAN protocol may include unsynchronized service discovery (USD) 915. For example, the WLAN communication based on the second WLAN protocol may include at least one of pairing or NDP configuration performed after the electronic device 101 and the second external electronic device 900 have completed synchronization for NAN communication in operation 917. For example, the discovery window of the electronic device 101 or the second external electronic device 900 may be adjusted based on synchronization for NAN communication between the electronic device 101 and the second external electronic device 900. For example, the synchronization for the NAN communication may include a series of operations in which the synchronization is performed based on time resources of one of the electronic device 101 and the second external electronic device 900, configured as a master device. For example, the master device may include a device (for example, the electronic device 101 or the second external electronic device 900) having a relatively large cluster grade (CG) among the electronic device 101 and the second external electronic device 900.

According to an embodiment, the second external electronic device 900 may perform WLAN communication based on the second WLAN protocol with the electronic device 101 through the first channel of the first frequency band and the second channel of the second frequency band, based on information related to WLAN communication based on the second WLAN protocol.

According to an embodiment, the second external electronic device 900 may update (or adjust) a predetermined time interval related to a discovery window of the first channel of the first frequency band. For example, when receiving information related to WLAN communication based on the second WLAN protocol from the electronic device 101 in a state of configuring the NAN cluster through the first channel of the first frequency band, the second external electronic device 900 may update (or adjust) a predetermined time interval related to a discovery window of the first channel of the first frequency band of the second external electronic device 900, based on the predetermined time interval of the electronic device 101.

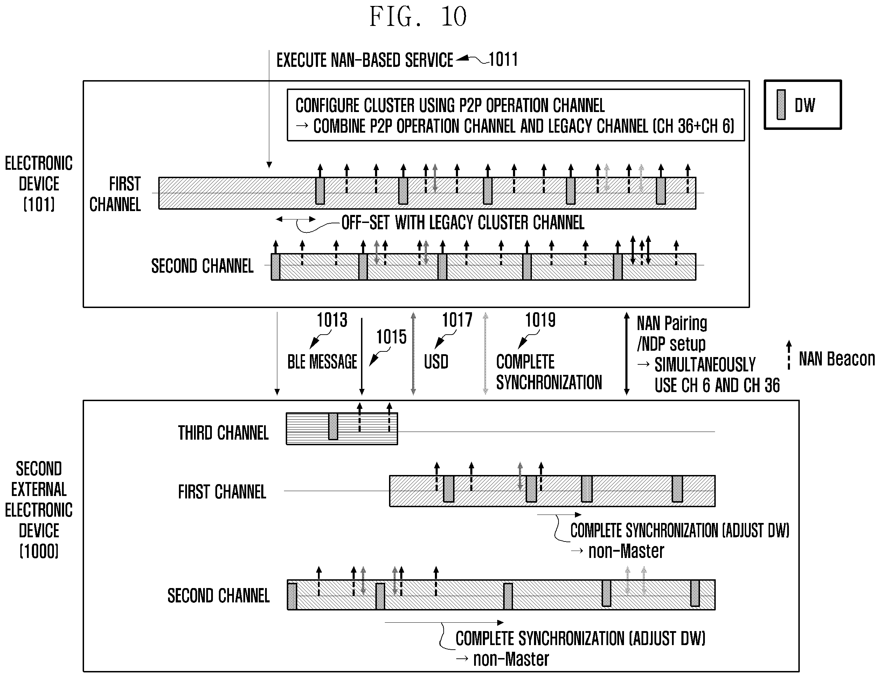

FIG. 10 illustrates an example for performing WLAN communication based on heterogeneous WLAN protocols by an electronic device according to an embodiment.

According to an embodiment referring to FIG. 10, the electronic device 101 may perform WLAN communication based on a first WLAN protocol with a first external electronic device through a first channel (e.g., channel 36) of a first frequency band (e.g., a band of about 5 GHz), based on the generation of an event related to the first WLAN protocol. For example, the electronic device 101 may perform WLAN communication based on the first WLAN protocol with the first external electronic device through the first core 600 and the first RFIC 610 of the communication circuit 510. For example, the first WLAN protocol may include at least one of WLAN-based direct communication (e.g., Wi-Fi direct or Wi-Fi P2P), mobile hotspot, or Wi-Fi legacy.

According to an embodiment, when an event related to a second WLAN protocol is generated during WLAN communication based on the first WLAN protocol in operation 1011, the electronic device 101 may configure a NAN cluster through the first channel of the first frequency band used for WLAN communication based on the first WLAN protocol and a second channel (e.g., channel 6) of a second frequency band (e.g., a band of about 2.4 GHz) different from the first frequency band. For example, when the WLAN communication of the first WLAN protocol is performed through the first core 600 of the communication circuit 510, the second channel of the second frequency band may be selected by a frequency band supported by the second core 602 among predetermined channels related to the second WLAN protocol. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, the predetermined channels related to the second WLAN protocol are used by the NAN protocol for each service area (e.g., country) and may include preconfigured channels used by the NAN protocol. For example, the event related to the second WLAN protocol may be generated based on the execution of an application program or function related to the second WLAN protocol or the reception of an input (e.g., a touch input, a gesture input, or a voice input) related to the second WLAN protocol. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

According to an embodiment, the electronic device 101 may transmit information related to the execution of WLAN communication based on the second WLAN protocol through OOB communication to a second external electronic device 1000, based on the configuration of the NAN cluster in operation 1013. For example, the information related to the execution of WLAN communication based on the second WLAN protocol may include request information of the NAN communication.

According to an embodiment, the electronic device 101 may transmit the information related to the WLAN communication based on the second WLAN protocol to the second external electronic device 1000 through the NAN communication of the second channel of the second frequency band in operation 1015. For example, the information related to the WLAN communication based on the second WLAN protocol may be included in a NAN-based message (e.g., SDF) transmitted through the second channel and transmitted to the second external electronic device 1000. For example, the information related to the WLAN communication based on the second WLAN protocol may include at least one piece of information related to the first channel of the first frequency band for performing the WLAN communication based on the second WLAN protocol or information related to a predetermined time interval.

According to an embodiment, the electronic device 101 may update (or adjust) a predetermined time interval related to a discovery window of the first channel of the first frequency band. For example, when receiving the information related to the WLAN communication based on the second WLAN protocol from the electronic device 101 in a state of configuring a NAN cluster through the first channel of the first frequency band, the second external electronic device 1000 may transmit the information related to the WLAN communication based on the second WLAN protocol operated in the second external electronic device 1000 to the electronic device 101 through NAN communication of the second channel of the second frequency band. For example, the electronic device 101 may update (or adjust) a predetermined time interval related to a discovery window of the first channel of the first frequency band for performing the WLAN communication based on the second WLAN protocol of the electronic device 1000, based on the predetermined time interval of the second external electronic device 1000.

According to an embodiment, the electronic device 101 may perform WLAN communication (e.g., NAN communication) based on the second WLAN protocol with the second external electronic device 1000 through the NAN cluster based on the second channel of the second frequency band and the first channel of the first frequency band. For example, the WLAN communication based on the second WLAN protocol may include a USD 1017. For example, the WLAN communication based on the second WLAN protocol may include at least one of pairing or NDP configuration performed after the electronic device 101 and the second external electronic device 1000 have completed synchronization for NAN communication 1019. For example, the discovery window of the electronic device 101 or the second external electronic device 1000 may be adjusted based on synchronization for NAN communication between the electronic device 101 and the second external electronic device 1000.

According to an embodiment, the second external electronic device 1000 may perform the WLAN communication based on the second WLAN protocol with the electronic device 101 through a third channel (e.g., channel 149) of the first frequency band and the second channel (e.g., channel 6) of the second frequency band, based on information related to the execution of the WLAN communication based on the second WLAN protocol. For example, the second channel (e.g., channel 6) and/or the third channel (e.g., channel 149) may include predetermined channels related to the second WLAN protocol.

According to an embodiment, the second external electronic device 1000 may change the third channel of the first frequency band to the first channel, based on the information related to the WLAN communication based on the second WLAN protocol. For example, the second external electronic device 1000 may perform the WLAN communication based on the second WLAN protocol with the electronic device 101 through the first channel of the first frequency band and the second channel of the second frequency band.

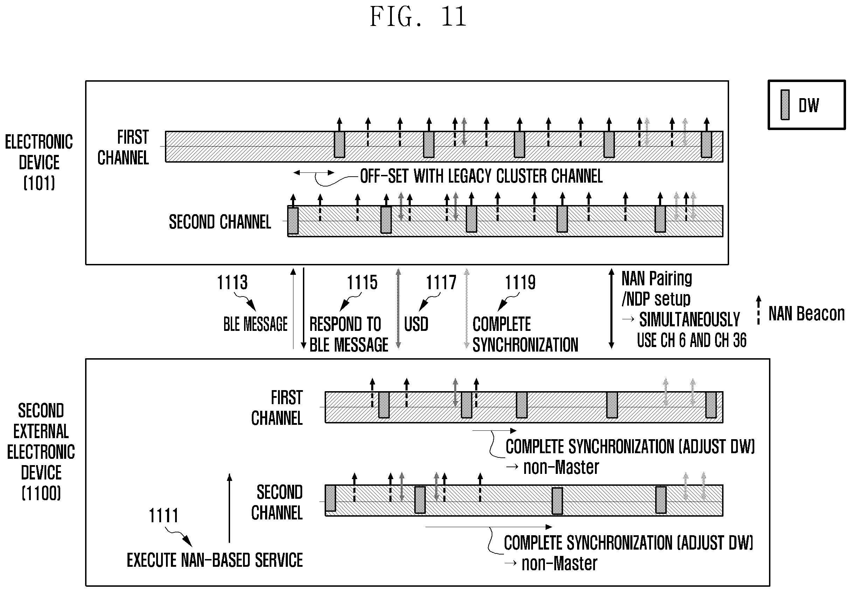

FIG. 11 illustrates an example for performing WLAN communication based on heterogeneous WLAN protocols by an electronic device according to an embodiment.

According to an embodiment referring to FIG. 11, the electronic device 101 may perform WLAN communication based on a first WLAN protocol with a first external electronic device through a first channel (e.g., channel 36) of a first frequency band (e.g., a band of about 5 GHz), based on the generation of an event related to the first WLAN protocol. For example, the electronic device 101 may perform WLAN communication based on the first WLAN protocol with the first external electronic device through the first core 600 and the first RFIC 610 of the communication circuit 510. For example, the first WLAN protocol may include at least one of WLAN-based direct communication (e.g., Wi-Fi direct or Wi-Fi P2P), mobile hotspot, or Wi-Fi legacy.

According to an embodiment, when an event related to a second WLAN protocol is generated in operation 1111, a second external electronic device 1100 may transmit information related to the execution of WLAN communication based on the second WLAN protocol to the electronic device 101 through OOB communication in operation 1113. For example, the information related to the execution of the WLAN communication based on the second WLAN protocol may include request information of NAN communication. For example, the event related to the second WLAN protocol may be generated based on the execution of an application program or function related to the second WLAN protocol or the reception of an input (e.g., a touch input, a gesture input, or a voice input) related to the second WLAN protocol.

According to an embodiment, when receiving the information related to the execution of the WLAN communication based on the second WLAN protocol during WLAN communication of the first WLAN protocol, the electronic device 101 may identify channels for performing the WLAN communication based on the second WLAN protocol, based on the first channel of the first frequency band used for the WLAN communication based on the first WLAN protocol and predetermined channels related to the second WLAN protocol. For example, when WLAN communication of the first WLAN protocol is performed through the first core 600 of the communication circuit 510, the electronic device 101 may select, as a channel for performing WLAN communication of the second WLAN protocol, the second channel of the second frequency band supported by the second core 602 among the predetermined channels related to the second WLAN protocol. The electronic device 101 may determine that the first channel of the first frequency band and the second channel of the second frequency band used for WLAN communication of the first WLAN protocol are channels for performing WLAN communication of the second WLAN protocol.

For example, the electronic device 101 may configure a NAN cluster through the first channel of the first frequency band used for the WLAN communication of the first WLAN protocol and a second channel (e.g., channel 6) of a second frequency band (e.g., a band of about 2.4 GHz) different from the first frequency band. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily. For example, the predetermined channels related to the second WLAN protocol are used by the NAN protocol for each service area (e.g., country) and may include preconfigured channels (e.g., channel 6 and/or channel 149).

According to an embodiment, the electronic device 101 may transmit information related to WLAN communication based on the second WLAN protocol to the second external electronic device 1100 through OOB communication, based on the configuration of the NAN cluster in operation 1115. For example, the information related to the WLAN communication based on the second WLAN protocol may include at least one piece of information related to the NAN cluster and information related to a predetermined time interval. For example, the information related to the NAN cluster may include information related to the second channel of the second frequency band and/or the first channel of the first frequency band for performing WLAN communication based on the second WLAN protocol by the electronic device 101.

According to an embodiment, the electronic device 101 may perform WLAN communication (e.g., NAN communication) based on a second WLAN protocol with the second external electronic device 1100 through the NAN cluster based on the second channel of the second frequency band and the first channel of the first frequency band. For example, the WLAN communication based on the second WLAN protocol may include unsynchronized service discovery (USD) 1117. For example, the WLAN communication based on the second WLAN protocol may include at least one of pairing or NDP configuration performed after the electronic device 101 and the second external electronic device 1100 have completed synchronization for NAN communication in operation 1119. For example, the discovery window of the electronic device 101 or the second external electronic device 1100 may be adjusted based on synchronization for NAN communication between the electronic device 101 and the second external electronic device 1100. For example, the synchronization for the NAN communication may include a series of operations in which the synchronization is performed based on time resources of one of the electronic device 101 and the second external electronic device 1100, configured as a master device.

According to an embodiment, the second external electronic device 1100 may perform WLAN communication based on the second WLAN protocol with the electronic device 101 through the first channel of the first frequency band and the second channel of the second frequency band, based on information related to WLAN communication based on the second WLAN protocol. For example, the second external electronic device 1100 may perform WLAN communication with the electronic device 101, based on the second WLAN protocol, through the NAN cluster configured through the second channel of the second frequency band and the first channel of the first frequency band.

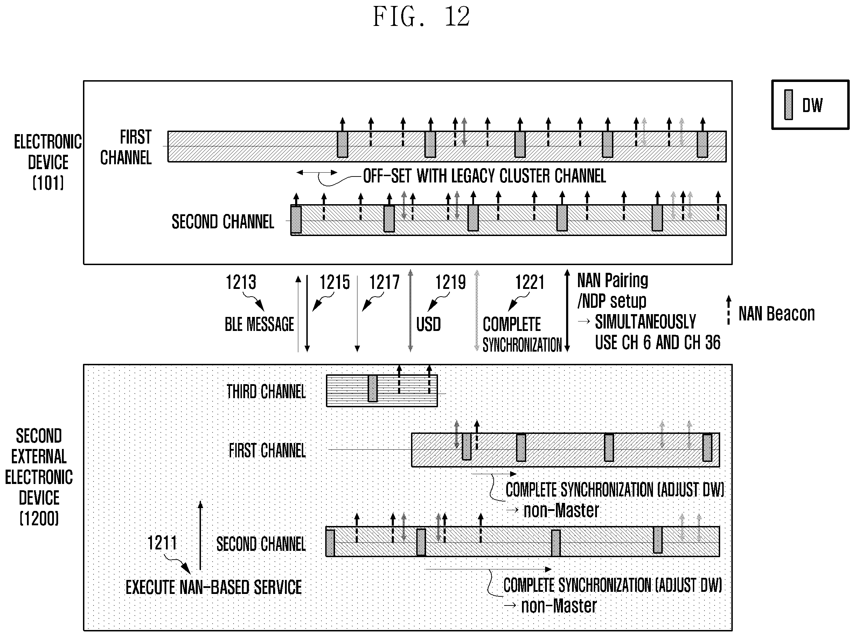

FIG. 12 is an example for performing WLAN communication based on heterogeneous WLAN protocols by an electronic device according to an embodiment.

According to an embodiment in reference to FIG. 12, the electronic device 101 may perform WLAN communication based on a first WLAN protocol with a first external electronic device through a first channel (e.g., channel 36) of a first frequency band (e.g., a band of about 5 GHz), based on the generation of an event related to the first WLAN protocol. For example, the electronic device 101 may perform WLAN communication based on the first WLAN protocol with the first external electronic device through the first core 600 and the first RFIC 610 of the communication circuit 510. For example, the first WLAN protocol may include at least one of WLAN-based direct communication (e.g., Wi-Fi direct or Wi-Fi P2P), mobile hotspot, or Wi-Fi legacy.

According to an embodiment, when an event related to a second WLAN protocol is generated in operation 1211, a second external electronic device 1200 may transmit information related to the execution of WLAN communication based on the second WLAN protocol to the electronic device 101 through OOB communication in operation 1213. For example, the information related to the execution of the WLAN communication based on the second WLAN protocol may include request information of the NAN communication. For example, the event related to the second WLAN protocol may be generated based on the execution of an application program or function related to the second WLAN protocol or the reception of an input (e.g., a touch input, a gesture input, or a voice input) related to the second WLAN protocol.

According to an embodiment, when receiving the information related to the execution of the WLAN communication based on the second WLAN protocol during WLAN communication of the first WLAN protocol, the electronic device 101 may configure a NAN cluster through the first channel of the first frequency band used for WLAN communication of the first WLAN protocol and a second channel (e.g., channel 6) of a second frequency band (e.g., 2.4GHz band) different from the first frequency band. For example, when WLAN communication of the first WLAN protocol is performed through the first core 600 of the communication circuit 510, the electronic device 101 may select, as a channel for performing WLAN communication of the second WLAN protocol, the second channel of the second frequency band supported by the second core 602 among the predetermined channels related to the second WLAN protocol. The electronic device 101 may configure a NAN cluster through the first channel of the first frequency band and the second channel of the second frequency band. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily. For example, the predetermined channels related to the second WLAN protocol are used by the NAN protocol for each service area (e.g., country) and may include preconfigured channels (e.g., channel 6 and channel 149 or channel 6 and channel 44).

According to an embodiment, in response to the information related to the execution of the WLAN communication based on the WLAN protocol, the electronic device 101 may transmit the information related to the execution of the WLAN communication based on the second WLAN protocol to the second external electronic device 1200 through OOB communication in operation 1215. For example, the information related to the execution of the WLAN communication based on the second WLAN protocol may include execution information of NAN communication.

According to an embodiment, the electronic device 101 may transmit the information related to the WLAN communication based on the second WLAN protocol to the second external electronic device 1200 through the NAN communication of the second channel of the second frequency band in operation 1217. For example, the information related to the WLAN communication based on the second WLAN protocol may be included in a NAN-based message (e.g., SDF) transmitted through the second channel and transmitted to the second external electronic device 1200. For example, the information related to the WLAN communication based on the second WLAN protocol may include at least one piece of information related to the NAN cluster and information related to a specified time interval. For example, the information related to the NAN cluster may include information related to the first channel of the first frequency band for performing WLAN communication based on the second WLAN protocol by the electronic device 101.

According to an embodiment, the electronic device 101 may perform WLAN communication (e.g., NAN communication) based on a second WLAN protocol with the second external electronic device 1200 through the NAN cluster based on the second channel of the second frequency band and the first channel of the first frequency band. For example, the WLAN communication based on the second WLAN protocol may include a USD 1219. For example, the WLAN communication based on the second WLAN protocol may include at least one of pairing or NDP configuration performed after the electronic device 101 and the second external electronic device 1200 have completed synchronization for NAN communication 1221. For example, the discovery window of the electronic device 101 or the second external electronic device 1200 may be adjusted based on synchronization for NAN communication between the electronic device 101 and the second external electronic device 1200.

According to an embodiment, the second external electronic device 1200 may perform the WLAN communication based on the second WLAN protocol with the electronic device 101 through a third channel (e.g., channel 149) of the first frequency band and the second channel (e.g., channel 6) of the second frequency band, based on information related to the execution of the WLAN communication based on the second WLAN protocol. For example, the second channel (e.g., channel 6) and/or the third channel (e.g., channel 149) may include predetermined channels related to the second WLAN protocol.

According to an embodiment, the second external electronic device 1200 may change the third channel of the first frequency band to the first channel, based on the information related to the WLAN communication based on the second WLAN protocol. For example, the second external electronic device 1200 may perform the WLAN communication based on the second WLAN protocol with the electronic device 101 through the first channel of the first frequency band and the second channel of the second frequency band.

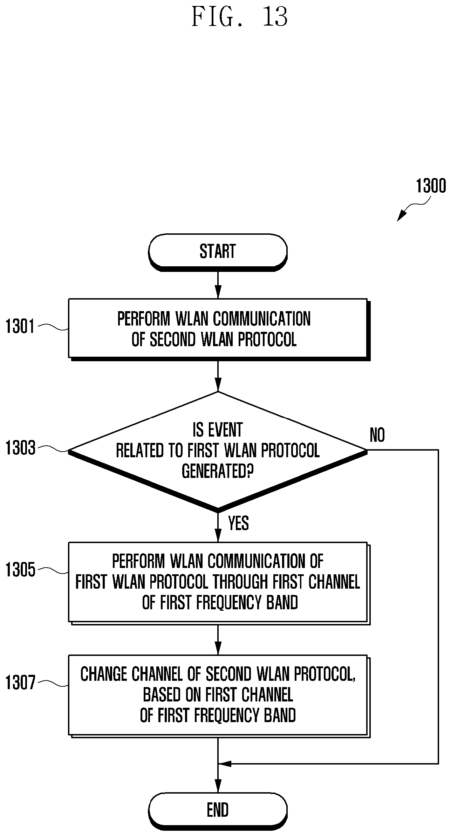

FIG. 13 is a flowchart 1300 illustrating an operation for performing WLAN communication based on heterogeneous WLAN protocols by an electronic device according to an embodiment. In the following embodiments, respective operations may be sequentially performed but the sequential performance is not necessary. For example, orders of the operations may be changed, and at least two operations may be performed in parallel. For example, the electronic device of FIG. 13 may be the electronic device 101 of FIG. 1, 2, 3, 4, 5, or 6.

According to an embodiment referring to FIG. 13, an electronic device (e.g., the electronic device 101) or a processor (e.g., the processor 120 in FIG. 1 or the processor 500 in FIG. 5) may perform WLAN communication based on a second WLAN protocol with a second external electronic device in operation 1301. For example, the processor 500 may control the communication circuit 510 to perform WLAN communication based on the second WLAN protocol through channels predetermined to perform the WLAN communication based on the second WLAN protocol, based on the generation of an event related to the second WLAN protocol. For example, the channels predetermined to perform the WLAN communication of the second WLAN protocol may include channels (e.g., channel 6 and channel 149 or channel 6 and channel 44) preconfigured to be used by the NAN protocol for each service area (for example, country). For example, the event related to the second WLAN protocol may be generated based on the execution of an application program or function related to the second WLAN protocol, the reception of an input (e.g., a touch input, a gesture input, or a voice input) related to the second WLAN protocol, or the reception of a control signal related to the second WLAN protocol.

For example, the processor 500 may control the communication circuit 510 to perform WLAN communication based on the second WLAN protocol with the second external electronic device through a NAN cluster configured through a second channel (e.g., channel 6) of the second frequency band (e.g., a band of about 2.4 GHz) and a third channel (e.g., channel 149 or channel 44) of the first frequency band (e.g., a band of about 5 GHz).

According to an embodiment, the electronic device (e.g., the electronic device 101) or the processor (e.g., the processor 120 or 500) may identify whether an event related to the first WLAN protocol is generated during WLAN communication based on the second WLAN protocol in operation 1303. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol.

According to an embodiment, when an event related to the first WLAN protocol is not generated (e.g., "No" in operation 1303), the electronic device (e.g., the electronic device 101) or the processor (e.g., the processor 120 or 500) may terminate an embodiment for performing WLAN communication based on the heterogeneous WLAN protocols. For example, when an event related to the first WLAN protocol is not generated, the processor 500 may control the communication circuit 510 to maintain the WLAN communication with the second external electronic device, based on the second WLAN protocol, through the third channel of the first frequency band and the second channel of the second frequency band.

According to an embodiment, when an event related to the first WLAN protocol is generated (e.g., "Yes" in operation 1303), the electronic device (e.g., the electronic device 101) or the processor (e.g., the processor 120 or 500) may perform WLAN communication based on the first WLAN protocol through the first channel of the first frequency band in operation 1305. For example, the processor 500 may control the communication circuit 510 to perform WLAN communication based on the first WLAN protocol with a first external electronic device through the first channel of the first frequency band, based on the generation of an event related to the first wireless LAN protocol. For example, WLAN communication based on the first WLAN protocol may be performed by the communication circuit 510 through the first core 600 and the first RFIC 610 supporting the first frequency band.

According to an embodiment, the electronic device (e.g., the electronic device 101) or the processor (e.g., the processor 120 or 500) may change some of the channels being used for the WLAN communication (e.g., NAN communication) based on the second WLAN protocol with the second external electronic device to other channels, based on the first channel of the WLAN communication based on the first WLAN protocol in operation 1307.

For example, the processor 500 may identify a channel capable of performing the WLAN communication of the second WLAN protocol simultaneously with the first WLAN protocol among channels (e.g., channel 6 and/or 149) used for the WLAN communication of the second WLAN protocol, based on the first channel of the first WLAN protocol. For example, a channel capable of performing WLAN communication of the second WLAN protocol may include a second channel of the second frequency band supported by the second core 602 among predetermined channels related to the second WLAN protocol when the WLAN communication of the first WLAN protocol is performed through the first core 600 of the communication circuit 510.

For example, the processor 500 may control the communication circuit 510 (or the second core 602) to maintain the WLAN communication based on the second WLAN protocol with the second external electronic device through the second channel of the second frequency band.

For example, the processor 500 may control the communication circuit 510 (or the first core 600) to change the third channel of the first frequency band to the first channel of the first frequency band among the channels used for the WLAN communication of the second WLAN protocol, based on the first channel of the first WLAN protocol. The processor 500 may control the communication circuit 510 (or the first core 600) to configure a NAN cluster through the first channel (e.g., channel 36) of the first frequency band (e.g., about 5GHz band) and the second channel of the second frequency band, based on a change in a channel being used for WLAN communication (e.g., NAN communication) based on the second WLAN protocol. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, a discovery window of the first channel of the first frequency band may be configured to be delayed (or separated) by a predetermined time interval (e.g., offset) from a discovery window of the second channel of the second frequency band.

For example, the processor 500 may control the communication circuit 510 to transmit information related to WLAN communication based on the second WLAN protocol to the second external electronic device. For example, the information related to the WLAN communication based on the second WLAN protocol may include at least one piece of information related to the NAN cluster and information related to a specified time interval. For example, the information related to the WLAN communication based on the second WLAN protocol may be transmitted to the second external electronic device through the OOB communication. For example, the information related to the WLAN communication based on the second WLAN protocol may be transmitted to the second external electronic device through the NAN communication of second channel. For example, the information related to the NAN cluster may include information related to the second channel of the second frequency band and/or the first channel of the first frequency band for performing WLAN communication based on the second WLAN protocol by the electronic device 101.

For example, the processor 500 may control the communication circuit 510 to perform WLAN communication (e.g., NAN communication) based on the second WLAN protocol with the second external electronic device through the NAN cluster based on the second channel of the second frequency band and the first channel of the first frequency band.

According to an embodiment, the electronic device 101 may change some of the channels of the second WLAN protocol, based on the first channel of the first frequency band of the first WLAN protocol, so as to simultaneously perform WLAN communications based on the first WLAN protocol and WLAN communications based on the second WLAN protocol. For example, the first core 600 of the communication circuit 510 may simultaneously perform the WLAN communication of the first WLAN protocol and the WLAN communication of the second WLAN protocol through the first channel of the first frequency band. For example, the second core 602 of the communication circuit 510 may perform the WLAN communication of the second WLAN protocol through the second channel of the second frequency band.

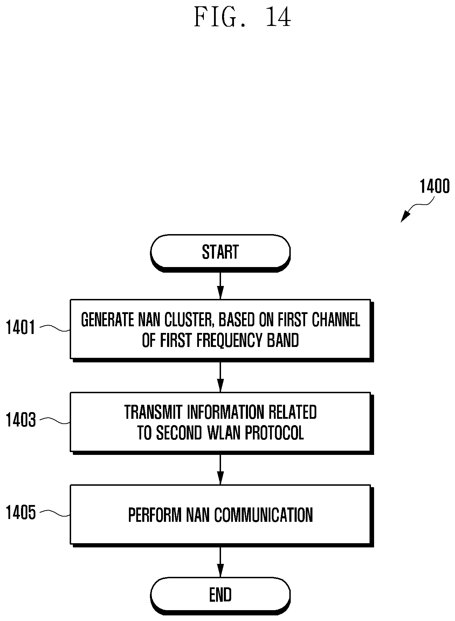

FIG. 14 is a flowchart 1400 for performing NAN communication based on a first WLAN protocol by an electronic device according to an embodiment. For example, at least some of FIG. 14 may include the detailed operation of operation 1307 of FIG. 13. In the following embodiments, respective operations may be sequentially performed but the sequential performance is not necessary. For example, orders of the operations may be changed, and at least two operations may be performed in parallel. For example, the electronic device of FIG. 14 may be the electronic device 101 of FIG. 1, 2, 3, 4, 5, or 6.

According to an embodiment referring to FIG. 14, when the WLAN based on a first WLAN protocol is performed during WLAN communication of a second WLAN protocol (e.g., operation 1305 in FIG. 13), the electronic device (e.g., the electronic device 101) or the processor (e.g., the processor 120 in FIG. 1 or the processor 500 in FIG. 5) may configure (or update) a NAN cluster, based on a first channel of a first frequency band used for the WLAN communication of the first WLAN protocol in operation 1401. For example, when the WLAN communication of the first WLAN protocol is performed through the first core 600 of the communication circuit 510, the processor 500 may select, as a channel capable of performing the WLAN communication of the second WLAN protocol, a second channel of a second frequency band supported by the second core 602 from among predetermined channels related to the second WLAN protocol. The processor 500 may determine that the WLAN communication of the second WLAN protocol with the second external electronic device through the second channel of the second frequency band and the first channel of the first frequency band is performed based on selection of the second channel of the second frequency band as the channel capable of performing the WLAN communication of the second WLAN protocol.

For example, in order to change the third channel of the first frequency band being used for the WLAN communication of the second WLAN protocol with the second external electronic device to the first channel of the first frequency band, the processor 500 may control the communication circuit 510 (or the first core 600) to configure a NAN cluster through the first channel of the first frequency band and the second channel of the second frequency band. For example, the processor 500 may control the communication circuit 510 (or the second core 602) to maintain the WLAN communication based on the second WLAN protocol with the second external electronic device through the second channel of the second frequency band. For example, the processor 500 may control the communication circuit 510 (or the first core 600) to configure a discovery window (DW) in the first channel of the first frequency band and transmit a beacon (e.g., a synchronization beacon or a scanning beacon) within the discovery window or between discovery windows. For example, a discovery window of the first channel of the first frequency band may be configured to be delayed (or separated) by a predetermined time interval (e.g., offset) from a discovery window of the second channel of the second frequency band. For example, the predetermined time interval may be configured arbitrarily.

According to an embodiment, the electronic device (for example, the electronic device 101) or the processor (for example, the processor 120 or 500) may transmit information related to WLAN communication based on the second WLAN protocol to an external electronic device in operation 1403. For example, the processor 500 may control the communication circuit 510 to transmit information related to WLAN communication based on the second WLAN protocol to the second external electronic device through OOB communication, based on the configuration of the NAN cluster. For example, the processor 500 may control the communication circuit 510 (e.g., the second core 602) to transmit the information related to the WLAN communication based on the second WLAN protocol to the second external electronic device through NAN communication of the second channel used for the configuration of the NAN cluster. For example, the information related to the WLAN communication based on the second WLAN protocol may be included in a NAN-based message (e.g., SDF) transmitted to the second external electronic device through the second channel and then transmitted to the second external electronic device. For example, the information related to the WLAN communication based on the second WLAN protocol may include at least one piece of information related to the NAN cluster and information related to a specified time interval. For example, the information related to the NAN cluster may include information related to the second channel of the second frequency band and/or the first channel of the first frequency band for performing WLAN communication based on the second WLAN protocol.

According to an embodiment, the electronic device (for example, the electronic device 101) or the processor (for example, the processor 120 or 500) may perform WLAN communication (for example, NAN communication) based on the second WLAN protocol with the second external electronic device through the NAN cluster based on the second channel of the second frequency band and the first channel of the first frequency band in operation 1405.

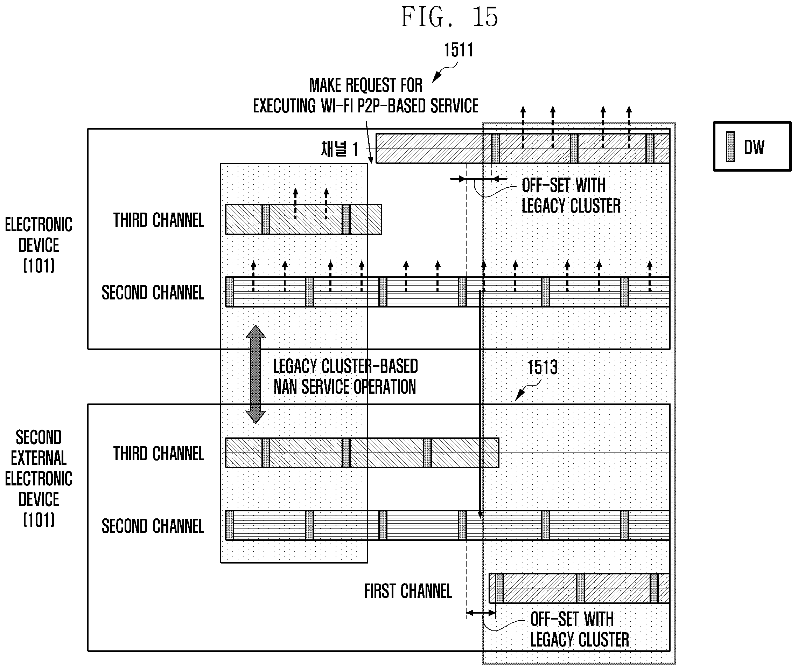

FIG. 15 is an example for performing WLAN communication based on heterogeneous WLAN protocols by an electronic device according to an embodiment.

According to an embodiment referring to FIG. 15, the electronic device 101 may perform WLAN communication based on a second WLAN protocol with a second external electronic device 1500 through predetermined channels, based on the generation of an event related to the second WLAN protocol. For example, the predetermined channels may include channel 6 and/or channel 149 related to WLAN communication as the channels used by the NAN protocol. For example, the event related to the second WLAN protocol may be generated based on the execution of an application program or function related to the second WLAN protocol, the reception of an input (e.g., a touch input, a gesture input, or a voice input) related to the second WLAN protocol, or the reception of a control signal related to the second WLAN protocol.

For example, the electronic device 101 may perform WLAN communication based on the second WLAN protocol with the second external electronic device 1500 through a NAN cluster configured through the second channel (e.g., channel 6) of the second frequency band and a third channel (e.g., channel 149) of the first frequency band. For example, the second WLAN protocol may include NAN communication as synchronized WLAN communication.

According to an embodiment, when an event related to the first WLAN protocol (e.g., Wi-Fi P2P) is generated during WLAN communication based on the second WLAN protocol with the second external electronic device 1500 (e.g., operation 1511), the electronic device 101 may perform WLAN communication based on the first WLAN protocol through the first channel (e.g., channel 36) of the first frequency band. For example, WLAN communication based on the first WLAN protocol may be performed by the communication circuit 510 through the first core 600 and the first RFIC 610 supporting the first frequency band. For example, the event related to the first WLAN protocol may be generated based on the execution of an application program or function related to the first WLAN protocol, the reception of an input (e.g., a touch input, a gesture input, or a voice input) related to the first WLAN protocol, or the reception of a control signal related to the first WLAN protocol.

According to an embodiment, the electronic device 101 may change a third channel to the first channel among the channels being used for the WLAN communication (e.g., NAN communication) based on the second WLAN protocol with the second external electronic device, based on the first channel of the WLAN communication based on the first WLAN protocol. For example, when the WLAN communication of the first WLAN protocol is performed through the first core 600 of the communication circuit 510, the electronic device 101 may determine to maintain the WLAN communication of the second WLAN protocol through the second channel of the second frequency band supported by the second core 602 among the predetermined channels related to the second WLAN protocol.

For example, the electronic device 101 may change the third channel of the first frequency band to the first channel of the first frequency band among the channels used for the WLAN communication of the second WLAN protocol, so that the WLAN communication of the first WLAN protocol and the second WLAN protocol may be simultaneously performed through the first core 600. The electronic device 101 may configure a NAN cluster through the first channel of the first frequency band and the second channel of the second frequency band, based on a change in the channel being used for the WLAN communication (e.g., NAN communication) based on the second WLAN protocol. For example, the configuration of the NAN cluster may include a series of operations for configuring a discovery window (DW) in the second channel of the second frequency band and transmitting a beacon (e.g., a synchronization beacon or a discovery beacon) within the discovery window or between discovery windows, and a series of operations for configuring a discovery window (DW) in the first channel of the first frequency band and transmitting a beacon (e.g., a synchronization beacon or a discovery beacon) within the discovery window or between discovery windows. For example, a discovery window of the first channel of the first frequency band may be configured to be delayed (or maintained) by a predetermined time interval (e.g., offset) from a discovery window of the second channel of the second frequency band.

According to an embodiment, the electronic device 101 may transmit information related to the WLAN communication based on the second WLAN protocol to the second external electronic device 1500, based on the change in some (e.g., channel 3) of the channels used for the WLAN communication based on the second WLAN protocol (e.g., operation 1513). For example, the information related to the WLAN communication based on the second WLAN protocol may include at least one piece of information related to the NAN cluster and information related to a specified time interval. For example, the information related to the WLAN communication, based on the second WLAN protocol may be transmitted to the second external electronic device 1500 through OOB communication. For example, the information related to the WLAN communication based on the second WLAN protocol may be transmitted to the second external electronic device 1500 through NAN communication of the second channel.

For example, the electronic device 101 may perform WLAN communication (e.g., NAN communication) based on the second WLAN protocol with the second external electronic device 1500 through a NAN cluster based on the second channel of the second frequency band and the first channel of the first frequency band.

According to an embodiment, the second external electronic device 1500 may perform WLAN communication based on the second WLAN protocol with the electronic device 101 through predetermined channels. For example, the second external electronic device 1500 may perform the WLAN communication based on the second WLAN protocol with the electronic device 101 through a third channel (e.g., channel 149) of the first frequency band and the second channel (e.g., channel 6) of the second frequency band, which are predetermined channels related to the second WLAN protocol.

According to an embodiment, the second external electronic device 1500 may maintain the WLAN communication based on the second WLAN protocol with the electronic device 101 through the second channel of the second frequency band, based on the information related to the WLAN communication based on the second WLAN protocol.

According to an embodiment, the second external electronic device 1500 may change the third channel of the first frequency band to the first channel, based on the information related to the WLAN communication based on the second WLAN protocol. For example, the second external electronic device 1500 may perform the WLAN communication based on the second WLAN protocol with the electronic device 101 through the first channel of the first frequency band and the second channel of the second frequency band. According to an embodiment, the second external electronic device 1500 may configure a NAN cluster through the first channel of the first frequency band and the second channel of the second frequency band, based on the information related to the WLAN communication based on the second WLAN protocol.

According to an embodiment, when the WLAN communication based on the first WLAN protocol is terminated during the WLAN communication based on the first WLAN protocol and the WLAN communication based on the second WLAN protocol, the electronic device 101 may change some (e.g., channel 6 and channel 36) of the channels of the WLAN communication (e.g., NAN communication) based on the second WLAN protocol. For example, when the WLAN communication based on the first WLAN protocol is terminated, the electronic device 101 may identify whether there is a channel different from the channel predetermined to perform the WLAN communication based on the second WLAN protocol among the channels (for example, channel 6 and/or channel 149) for the WLAN communication based on the second WLAN protocol configured based on the first channel of the first WLAN protocol. For example, when there is a first channel different from the channel predetermined to perform the WLAN communication of the second WLAN protocol, the electronic device 101 may determine (or decide) to change the first channel to a third channel (e.g., channel 144) of the first frequency band predetermined for the WLAN communication of the second WLAN protocol.

For example, the electronic device 101 may change the first channel of the first frequency band to the third channel among the channels used for the WLAN communication of the second WLAN protocol. For example, the change to the third channel may include a series of operations for configuring a NAN cluster through the third channel of the first frequency band and the second channel of the second frequency band.

According to an embodiment, when the WLAN communication based on the first WLAN protocol is terminated during the WLAN communication based on the first WLAN protocol and the WLAN communication based on the second WLAN protocol, the electronic device 101 may maintain the channels (e.g., channel 6 and channel 36) of the WLAN communication (e.g., NAN communication) based on the second WLAN protocol configured based on the first channel of the first WLAN protocol.

According to an embodiment, a method of operating an electronic device (e.g., the electronic device 101 in FIG. 1, FIG. 2, FIG. 3, FIG. 4, FIG. 5, or FIG. 6) may include an operation of performing WLAN communication of a first WLAN protocol with a first external electronic device by using a first channel of a first frequency band. According to an embodiment, the method of operating the electronic device may include an operation of, based on performance of the WLAN communication of the first WLAN protocol with the first external electronic device using the first channel of the first frequency band, performing WLAN communication of a second WLAN protocol with a second external electronic device by using the first channel of the first frequency band and a second channel of a second frequency band different from the first frequency band during the WLAN communication of the first WLAN protocol with the first external electronic device using the first channel.

According to an embodiment, the operation of performing the WLAN communication of the second WLAN protocol may include an operation of performing WLAN communication of the second WLAN protocol with the second external electronic device by using the first channel of the first frequency band and the second channel of the second frequency band during the WLAN communication of the first WLAN protocol with the first external electronic device using the first channel, based on an event related to execution of the second WLAN protocol during the WLAN communication of the first WLAN protocol with the first external electronic device using the first channel of the first frequency band.

According to an embodiment, the operation of performing the WLAN communication of the second WLAN protocol may include an operation of, when the WLAN communication of the first WLAN protocol with the first external electronic device using the first channel of the first frequency band is performed during the WLAN communication of the second WLAN protocol with the second external electronic device using the third channel of the first frequency band and the second channel of the second frequency band, changing the third channel of the first frequency band for the WLAN communication of the second WLAN protocol with the second external electronic device to the first channel of the first frequency band during the WLAN communication of the first WLAN protocol with the first external electronic device through the first channel of the first frequency band. According to an embodiment, the method of operating the electronic device may maintain, when the third channel of the first frequency band is changed to the first channel of the first frequency band, based on the execution of the WLAN communication of the first WLAN protocol with the first external electronic device using the first channel, the WLAN communication of the second WLAN protocol using the second channel of the second frequency band.

According to an embodiment, the operation of performing the WLAN communication of the second WLAN protocol may include an operation of configuring a discovery window of the second channel. According to an embodiment, the operation of performing the WLAN communication of the second WLAN protocol may include an operation of configuring a discovery window of the first channel to be delayed (or spaced) from the discovery window of the second channel by a predetermined time interval. According to an embodiment, the operation of performing the WLAN communication of the second WLAN protocol may include an operation of performing the WLAN communication of the second WLAN protocol with the second external electronic device, based on the discovery windows of the first and second channels.

According to an embodiment, the method of operating the electronic device may include an operation of transmitting information related to the first channel for performing the WLAN communication of the second WLAN protocol and the predetermined time interval to the second external electronic device through out of band (OOB).

According to an embodiment, the method of operating the electronic device may include an operation of transmitting information related to the first channel for performing the WLAN communication of the second WLAN protocol and the predetermined time interval to the second external electronic device through the WLAN communication of the second WLAN protocol through the second channel.

According to an embodiment, the information related to the first channel for performing the WLAN communication of the second WLAN protocol and the designated time interval may be included in a service discovery frame (SDF) transmitted to the second external electronic device through the second channel.

Embodiments of the disclosure in the specifications and drawings are presented to easily describe the technical content according to embodiments of the disclosure and provide specific examples for helping understanding of embodiments of the disclosure, but do not intent to limit the scope of the embodiments of the disclosure. Therefore, the scope of the embodiments of the disclosure should also include all changed or modified forms derived from the technical idea of the embodiments of the disclosure, in addition to the embodiments disclosed herein.

## Claims

1. An electronic device (101) comprising:
communication circuitry (192 or 510);
at least one processor (120 or 500) comprising processing circuitry; and
memory (130 or 520) storing instructions
wherein the instsructions, when executed by the at least one processor (120 or 500) individually or collectively, cause the electronic device (101) to:
perform, via the communication circuitry (192 or 510), WLAN communication of a first WLAN protocol with a first external electronic device by using a first channel in a first frequency band; and
based on performing the WLAN communication of the first WLAN protocol with the first external electronic device, perform WLAN communication of a second WLAN protocol with a second external electronic device by using the first channel in the first frequency band and a second channel in a second frequency band different from the first frequency band while performing the WLAN communication of the first WLAN protocol with the first external electronic device.

2. The electronic device of claim 1, wherein the WLAN communication of the first WLAN protocol comprises WLAN-based direct communication with the first external electronic device using channel 36 in a 5GHz band, and
wherein the WLAN communication of the second WLAN protocol comprises neighbor awareness networking (NAN) communication with the second external electronic device using channel 36 in the 5GHz band and channel 6 in a 2.4GHz band.

3. The electronic device of claim 1, wherein the communication circuitry is configured to:
perform the WLAN communication of the first WLAN protocol with the first external electronic device and the WLAN communication of the second WLAN protocol with the second external electronic device by using the first channel in the first frequency band; and
perform the WLAN communication of the second WLAN protocol with the second external electronic device by using the second channel in the second frequency band.

4. The electronic device of claim 1, wherein the instructions, when executed by the at least one processor (120 or 500) individually or collectively, cause the electronic device (101) to, in case of performing the WLAN communication of the first WLAN protocol with the first external electronic device by uisng the first channel in the first frequency band while performing the WLAN communication of the second WLAN protocol with the second external electronic device by using a third channel in the first frequency band and the second channel in the second frequency band, change the third channel in the first frequency band for the WLAN communication of the second WLAN protocol with the second external electronic device to the first channel in the first frequency band while performing the WLAN communication of the first WLAN protocol with the first external electronic device by using the first channel in the first frequency band.

5. The electronic device of claim 1, wherein the instructions, when executed by the at least one processor (120 or 500) individually or collectively, cause the electronic device (101) to:
configure a first discovery window of the second channel;
configure a second discovery window of the first channel; and
perform the WLAN communication of the second WLAN protocol with the second external electronic device, based on the first discovery window and the second descovery window, and
wherein the first discovery window is spaced a predetermined time interval apart from the second discovery window.

6. The electronic device of claim 1, wherein the instructions, when executed by the at least one processor (120 or 500) individually or collectively, cause the electronic device (101) to transmit information related to the first channel for performing the WLAN communication of the second WLAN protocol and the predetermined time interval to the second external electronic device via out of band (OOB) or through the WLAN communication of the second WLAN protocol using the second channel.

7. The electronic device of claim 1, wherein the communication circuitry (192 or 510) comprises a first core (600) configured to perform WLAN communication based on the first frequency band and a second core (602) configured to perform WLAN communication based on the second frequency band, and
wherein the instructions, when executed by the at least one processor (120 or 500) individually or collectively, cause the electronic device (101) to:
perform the WLAN communication of the first WLAN protocol with the first external electronic device and the WLAN communication of the second WLAN protocol with the second external electronic device by using the first channel in the first frequency band through the first core (600); and
perform the WLAN communication of the second WLAN protocol with the second external electronic device by using the second channel in the second frequency band through the second core (602).

8. The electronic device of claim 7, wherein the instructions, when executed by the at least one processor (120 or 500) individually or collectively, cause the electronic device (101) to, in case of performing the WLAN communication of the first WLAN protocol with the first external electronic device through the first core (600), perform the WLAN communication of the second WLAN protocol with the second external electronic device by using the second channel in the second frequency band and the first channel in the first frequency band, supported by the second core (602) among predetermined channels related to the second WLAN protocol.

9. A method of operating an electronic device (101), the method comprising:
performing wireless local area network (WLAN) communication of a first WLAN protocol with a first external electronic device by using a first channel in a first frequency band; and
based on performing the WLAN communication of the first WLAN communication with the first external electronic device, performing WLAN communication of a second WLAN protocol with a second external electronic device by using the first channel in the first frequency band and a second channel in a second frequency band different from the first frequency band while performing the WLAN communication of the first WLAN protocol with the first external electronic device.

10. The method of claim 9, wherein the WLAN communication of the first WLAN protocol comprises WLAN-based direct communication with the first external electronic device using channel 36 in a 5GHz band, and
wherein the WLAN communication of the second WLAN protocol comprises neighbor awareness networking (NAN) communication with the second external electronic device using channel 36 in the 5GHz band and channel 6 in a 2.4GHz band.

11. The method of claim 9, wherein the performing of the WLAN communication of the second WLAN protocol comprises, in case of performing the WLAN communication of the first WLAN protocol with the first external electronic device by using the first channel in the first frequency band whole performing the WLAN communication of the second WLAN protocol with the second external electronic device by using a third channel in the first frequency band and the second channel in the second frequency band, changing the third channel in the first frequency band for the WLAN communication of the second WLAN protocol with the second external electronic device to the first channel in the first frequency band while performing the WLAN communication of the first WLAN protocol with the first external electronic device by using the first channel in the first frequency band.

12. The method of claim 9, wherein the performing of the WLAN communication of the second WLAN protocol comprises:
configuring a first discovery window of the second channel;
configuring a second discovery window of the first channel to be spaced a predetermined time interval apart from the first discovery window of the second channel; and
performing the WLAN communication of the second WLAN protocol with the second external electronic device, based on the first discovery window and the second discovery window.

13. The method of claim 9, further comprising transmitting information related to the first channel for performing the WLAN communication of the second WLAN protocol and the predetermined time interval to the second external electronic device via out of band (OOB).

14. The method of claim 9, further comprising transmitting information related to the first channel for performing the WLAN communication of the second WLAN protocol and the predetermined time interval to the second external electronic device through the WLAN communication of the second WLAN protocol using the second channel.

15. A non-transitory computer-readable storage medium storing one or more programs, the one or more programs comprising instructions that, when executed by a processor of an electronic device, cause the electronic device to:
perform WLAN communication of a first WLAN protocol with a first external electronic device by using a first channel in a first frequency band; and
based on performing the WLAN communication of the first WLAN communication with the first external electronic device, perform WLAN communication of a second WLAN protocol with a second external electronic device by using the first channel in the first frequency band and a second channel in a second frequency band different ftom the first frequency band while performing the WLAN communication of the first WLAN protocol with the first external electronic device.
